(19) Europäisches Patentamt
European Patent Office
Office européen des brevets

(11) Veröffentlichungsnummer: **0 430 877 B1**

# (12) EUROPÄISCHE PATENTSCHRIFT

(45) Veröffentlichungstag der Patentschrift: **21.09.94**

(51) Int. Cl.[5]: **C09B 67/22**, D06P 3/06, D06P 1/39, C09B 29/30

(21) Anmeldenummer: **90810892.1**

(22) Anmeldetag: **20.11.90**

## (54) Farbstoffmischungen und deren Verwendung.

(30) Priorität: **28.11.89 CH 4252/89**

(43) Veröffentlichungstag der Anmeldung:
**05.06.91 Patentblatt 91/23**

(45) Bekanntmachung des Hinweises auf die Patenterteilung:
**21.09.94 Patentblatt 94/38**

(84) Benannte Vertragsstaaten:
**BE CH DE DK ES FR GB IT LI NL**

(56) Entgegenhaltungen:
**EP-A- 0 127 579**
**EP-A- 0 181 292**

**The Theory and Practice of Wool Dyeing;**
**C.L. Bird 1972**

(73) Patentinhaber: **CIBA-GEIGY AG**
**Klybeckstrasse 141**
**CH-4002 Basel (CH)**

(72) Erfinder: **Mäusezahl, Dieter, Dr.**
**Langgartenstrasse 19**
**CH-4105 Biel-Benken (CH)**

EP 0 430 877 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Mischungen rotfärbender Farbstoffe, die zum Färben von natürlichen oder synthetischen textilen Polyamidfasermaterialien aus wässrigem Bad geeignet sind, die sehr gute Echtheitseigenschaften aufweisen und die insbesondere in Kombination mit anderen Farbstoffen ein gutes Ziehverhalten, insbesondere aus Kurzflotten, zeigen.

Gegenstand der vorliegenden Erfindung ist eine Farbstoffmischung, die einen Farbstoff der Formel

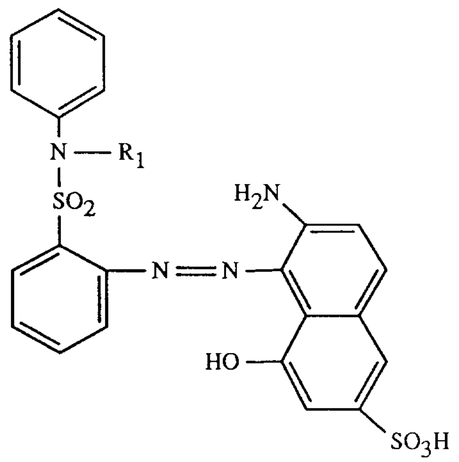

(1),

worin $R_1$ Methyl oder Aethyl ist, und mindestens einen Farbstoff der Formeln (2) bis (4)

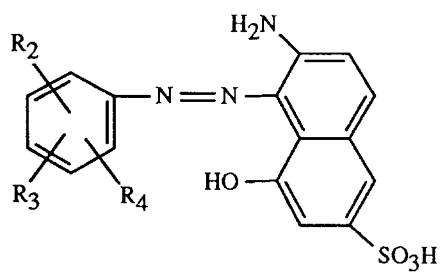

(2),

worin $R_2$ gegebenenfalls im Phenylring durch Halogen substituiertes Benzoylamino, 1-Azacycloheptan-N-sulfonyl oder

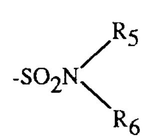

ist, wobei $R_5$ $C_1$-$C_8$-Alkyl oder gegebenenfalls durch $C_1$-$C_4$-Alkyl substituiertes Phenyl und $R_6$ Wasserstoff ist oder $R_5$ und $R_6$ $C_1$-$C_8$-Alkyl sind, $R_3$ Wasserstoff, Halogen oder $C_1$-$C_8$-Alkyl und $R_4$ Wasserstoff oder Halogen ist,

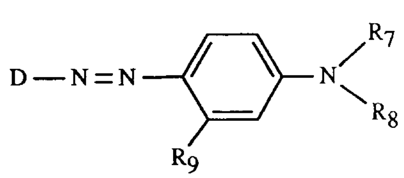

(3),

worin D gegebenenfalls substituiertes Phenyl, Thiophenyl oder Benzthiazolyl, $R_7$ $C_1$-$C_8$-Alkyl, $R_8$ gegebenenfalls substituiertes $C_1$-$C_8$-Alkyl und $R_9$ Wasserstoff oder $C_1$-$C_4$-Alkyl ist,
und

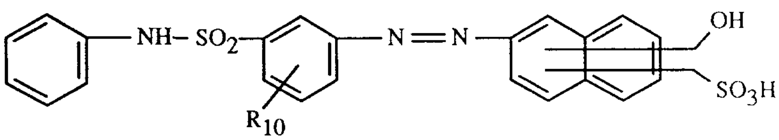 (4),

worin $R_{10}$ $C_1$-$C_4$-Alkyl ist, enthält.

Aus der EP-A-127,579 sind Farbstoffmischungen bekannt, welche einen Farbstoff der oben angegebenen Formel (1) und einen Farbstoff der oben angegebenen Formel (2), worin $R_2$ Phenylsulfonyl oder Phenoxysulfonyl ist, enthalten.

Von Interesse ist die erfindungsgemässe Farbstoffmischung, die einen Farbstoff der Formel (1) und einen Farbstoff der Formel (2) oder einen Farbstoff der Formel (1) und einen Farbstoff der Formel (3) oder einen Farbstoff der Formel (1) und einen Farbstoff der Formel (4) enthält.

Als $C_1$-$C_8$-Alkyl kommen für $R_3$, $R_5$ und $R_6$ in der Formel (2) und für $R_7$ und $R_8$ in Formel (3) unabhängig voneinander z. B. Methyl, Äthyl, Propyl, Isopropyl,n- Butyl, sek.-Butyl, tert.-Butyl, Isobutyl, Pentyl, Hexyl, Heptyl und Octyl in Betracht. Vorzugsweise sind $R_3$, $R_5$, $R_6$, $R_7$ und $R_8$ $C_1$-$C_4$-Alkyl.

Der Rest $R_8$ als $C_1$-$C_8$-Alkyl kann substituiert sein z.B. durch Sulfo, Sulfato oder Phenyl. Als Beispiele seien Benzyl, $\beta$-Sulfoäthyl, $\gamma$-Sulfopropyl und $\beta$-Sulfatoäthyl genannt.

Als Halogen kommen für $R_3$ und $R_4$ unabhängig voneinander z.B. Fluor, Brom oder insbesondere Chlor in Betracht.

Der Rest $R_2$ als Benzoylamino kann im Phenylring durch Halogen, wie z.B. Fluor, Brom oder insbesondere Chlor, substituiert sein.

Der Rest $R_5$ als Phenyl kann durch $C_1$-$C_4$-Alkyl, wie z. B. Methyl, Äthyl, Propyl, Isopropyl, n-Butyl, sek.-Butyl, tert.-Butyl oder Isobutyl, insbesondere Methyl, substituiert sein.

Als $C_1$-$C_4$-Alkyl kommen für $R_9$ in Formel (3) und für $R_{10}$ in Formel (4) unabhängig voneinander z. B. Methyl, Äthyl, Propyl, Isopropyl, n-Butyl, sek.-Butyl, tert.-Butyl oder Isobutyl, insbesondere Methyl, in Betracht.

Der Rest D in Formel (3) kann z.B. durch Halogen, wie Fluor, Chlor oder Brom, $C_1$-$C_4$-Alkyl, wie Methyl, Äthyl, Propyl, Isopropyl, n-Butyl, sek.-Butyl, tert.-Butyl oder Isobutyl, $C_1$-$C_4$-Alkoxy, wie z.B. Methoxy, Äthoxy, Propoxy oder Butoxy, $C_1$-$C_4$-Alkoxycarbonyl, wie z.B. Methoxycarbonyl oder Aethoxycarbonyl, Sulfo oder gegebenenfalls im Alkylteil durch Sulfo substituiertes $C_1$-$C_4$-Alkylaminosulfonyl, wie z.B. Methylaminosulfonyl, Aethylaminosulfonyl oder $\beta$-Sulfoäthylaminosulfonyl, substituiert sein.

Der Rest $R_2$ im Farbstoff der Formel (2) ist bevorzugt $-SO_2N(n-C_4H_9)_2$, 1-Azacycloheptan-N-sulfonyl, gegebenenfalls im Phenylring durch Chlor substituiertes Benzoylamino oder gegebenenfalls im Phenylring durch Methyl substituiertes Phenylaminosulfonyl.

Der Rest $R_3$ im Farbstoff der Formel (2) ist bevorzugt Wasserstoff, Methyl oder Chlor.

Der Rest $R_4$ im Farbstoff der Formel (2) ist bevorzugt Wasserstoff oder Chlor, insbesondere Wasserstoff.

Der Rest $R_{10}$ im Farbstoff der Formel (4) ist bevorzugt Methyl.

Besonders bevorzugt ist eine Farbstoffmischung, die einen Farbstoff der Formel (2), worin $R_2$ $-SO_2N(n-C_4H_9)_2$, 1-Azacycloheptan-N-sulfonyl, gegebenenfalls im Phenylring durch Chlor substituiertes Benzoylamino oder gegebenenfalls im Phenylring durch Methyl substituiertes Phenylaminosulfonyl, $R_3$ Wasserstoff, Methyl oder Chlor und $R_4$ Wasserstoff oder Chlor ist, enthält.

Ebenfalls besonders bevorzugt ist eine Farbstoffmischung, die einen Farbstoff der Formel (3), worin D durch Chlor, Sulfo, Methylaminosulfonyl, Aethylaminosulfonyl oder $\beta$-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_7$ Aethyl, $R_8$ Aethyl, $\beta$-Sulfatoäthyl,

$$-(CH_2)_{2\text{-}3}SO_3H$$

oder Benzyl und $R_9$ Wasserstoff oder Methyl ist, enthält.

Weiterhin besonders bevorzugt ist eine Farbstoffmischung, die als Farbstoff der Formel (4) einen Farbstoff der Formel

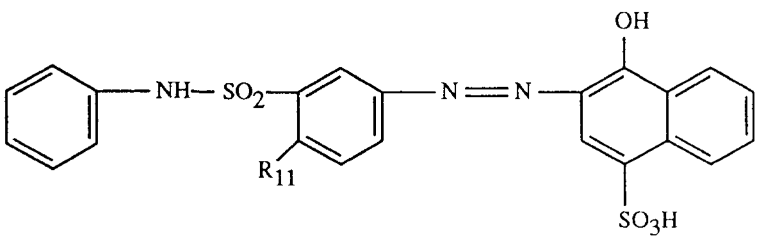

(5),

worin $R_{11}$ $C_1$-$C_4$-Alkyl, insbesondere Methyl ist, enthält.

Ganz besonders bevorzugt ist eine Farbstoffmischung, die einen Farbstoff der Formel (2), worin $R_2$ -$SO_2N(n\text{-}C_4H_9)_2$, 1-Azacycloheptan-N-sulfonyl, gegebenenfalls im Phenylring durch Chlor substituiertes Benzoylamino oder gegebenenfalls im Phenylring durch Methyl substituiertes Phenylaminosulfonyl, $R_3$ Wasserstoff, Methyl oder Chlor und $R_4$ Wasserstoff oder Chlor ist, oder einen Farbstoff der Formel (3), worin D durch Chlor, Sulfo, Methylaminosulfonyl, Aethylaminosulfonyl oder $\beta$-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_7$ Aethyl, $R_8$ Aethyl, $\beta$-Sulfatoäthyl,

$$-(CH_2)_{2-3}SO_3H$$

oder Benzyl und $R_9$ Wasserstoff oder Methyl ist, oder einen Farbstoff der Formel (5), worin $R_{11}$ Methyl ist, enthält. Insbesondere enthalten die oben angegebenen Farbstoffmischungen einen Farbstoff der Formel (1), worin $R_1$ Aethyl ist.

Ganz besonders bevorzugt ist eine Farbstoffmischung, die einen Farbstoff der Formel (1), worin $R_1$ Methyl oder Aethyl, insbesondere Aethyl, ist, und mindestens einen Farbstoff der Formeln (6) bis (16):

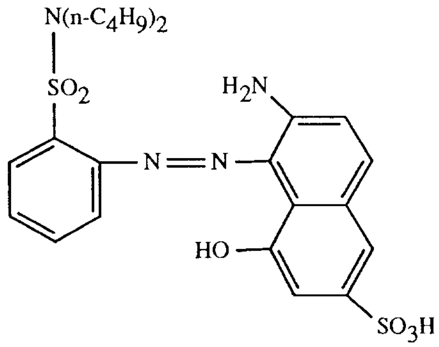

(6),

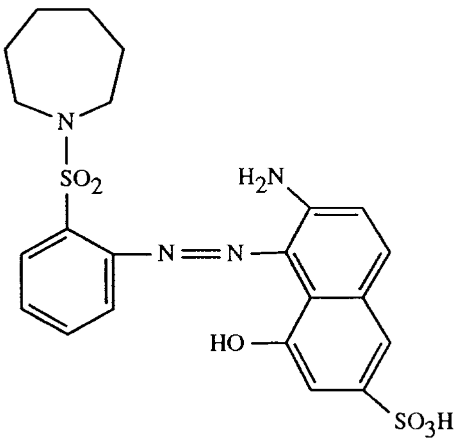

(7),

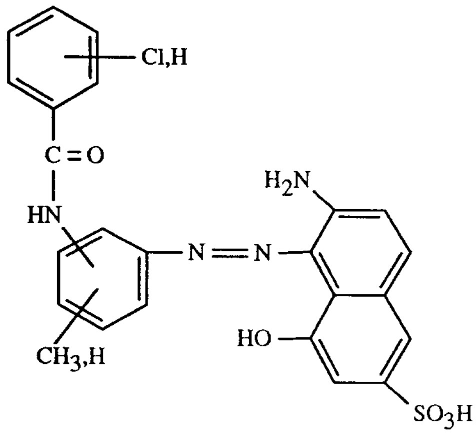

(8),

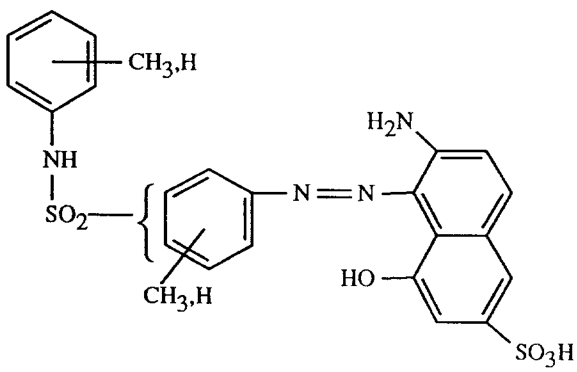

(9),

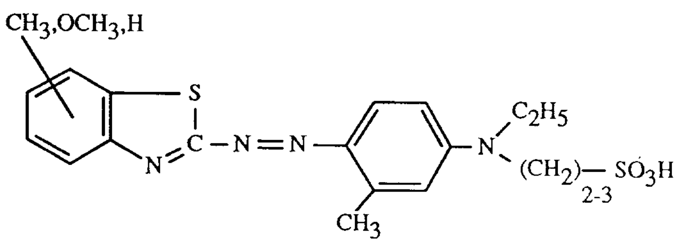

(10),

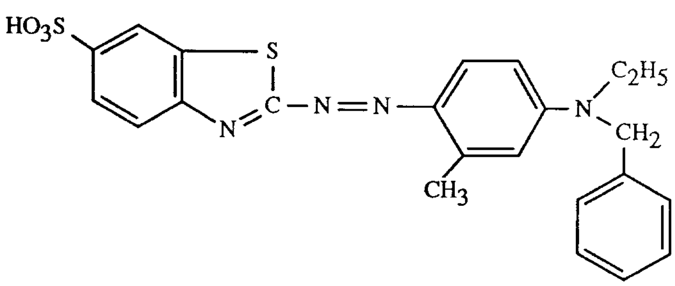

(11),

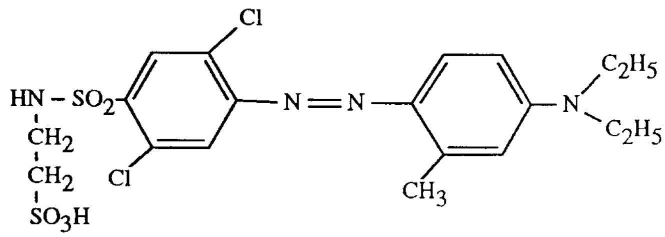

(12),

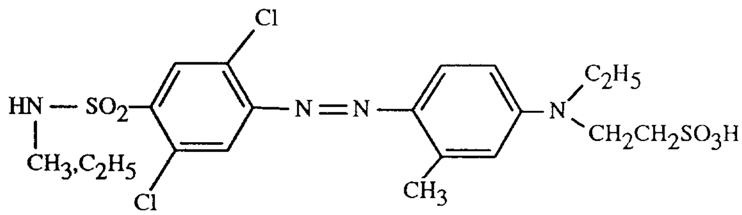

(13),

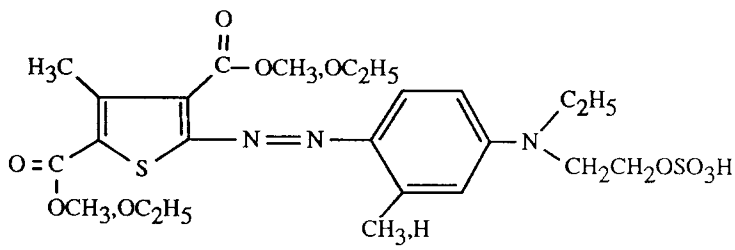

(14),

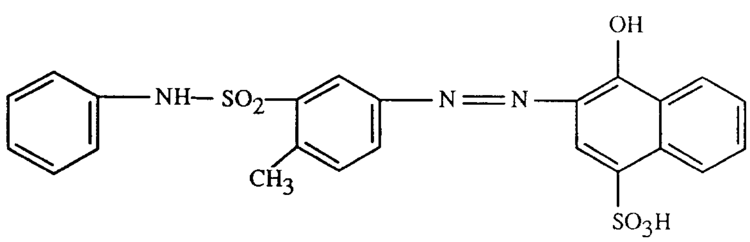

(15) und

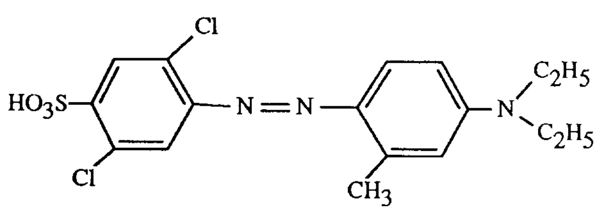

(16)

enthält, wobei im Farbstoff der Formel (9) die Phenylaminosulfonylgruppe in 3- oder 4-Position an den Phenylring gebunden ist.

Ganz besonders wichtig ist eine Farbstoffmischung, die einen Farbstoff der Formel (1), worin $R_1$ Methyl oder Aethyl, insbesondere Aethyl, ist, und mindestens einen Farbstoff der Formeln (6), (7), (11), (12) und (13) enthält.

In den erfindungsgemässen Farbstoffmischungen ist das Verhältnis der Farbstoffe der Formeln (1) und (2) oder (3) oder (4) oder das Verhältnis der Farbstoffe der Formeln (1) und (4), (5), (6), (7), (8), (9), (10), (11), (12), (13), (14), (15) oder (16) von 10:90 bis 90:10 und insbesondere von 40:60 bis 60:40 bevorzugt. Das Verhältnis der Farbstoffe der Formeln (1) und (2) oder (3) oder (4) und insbesondere das Verhältnis der Farbstoffe der Formeln (1) und (4), (5), (6), (7), (8), (9), (10), (11), (12), (13), (14), (15) oder (16) von 55:45 bis 45:55 ist ganz besonders bevorzugt.

Die Farbstoffe der Formeln (1), (2), (3) und (4) sind an sich bekannt oder können in Analogie zu bekannten Farbstoffen hergestellt werden.

Die erfindungsgemässe Farbstoffmischung kann durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen durch Zerstäubungstrocknung der wässrigen Farbstoffmischungen hergestellt werden.

Weiterhin können diejenigen Farbstoffmischungen der vorliegenden Erfindung, worin beide Mischungspartner 1-Hydroxy-7-aminonaphthalin-3-sulfonsäure als Kupplungskomponente enthalten, durch Mischsynthese hergestellt werden, z.B. durch Umsetzung von 2-Phenyl-N-äthylaminosulfonylanilin (bzw. 2-Phenyl-N-methylaminosulfonylanilin) und der Diazokomponente des zweiten Mischungspartners mit 1-Hydroxy-7-aminonaphthalin-3-sulfonsäure. Die Umsetzung erfolgt z.B. durch Diazotierung in wässrig-mineralsaurer Lösung bei tiefer Temperatur und Kupplung bei sauren, neutralen bis alkalischen pH-Werten.

Gegenstand der Erfindung ist ferner ein Verfahren zum Färben und Bedrucken von natürlichen oder synthetischen Polyamidmaterialien mit der erfindungsgemässen Farbstoffmischung, die den Farbstoff der Formel (1) und mindestens einen Farbstoff der Formeln (2), (3) und (4) enthält. Als synthetische Polyamidmaterialien kommen z.B. Polyamid 6.6- oder Polyamid 6-Fasermaterialien in Betracht und als natürliche Polyamidmaterialien z.B. Wolle. Zum Färben und Bedrucken werden dabei die üblichen Färbe- bzw. Druckverfahren angewendet.

Die Farbstoffmischung mit dem Farbstoff der Formel (1) und mindestens einem Farbstoff der Formeln (2), (3) und (4) eignet sich besonders zum Färben und Bedrucken in Kombination mit anderen Farbstoffen und insbesondere zum Färben und Bedrucken nach dem Trichromie-Prinzip. Unter Trichromie ist dabei die additive Farbmischung dreier passend gewählter gelb-, rot- und blaufärbender Farbstoffe in den zur Erzielung der gewünschten Nuance notwendigen Mengen zu verstehen. Besonders geeignet ist die erfindungsgemässe Farbstoffmischung zum Färben aus Kurzflotten wie z.B. bei Kontinuefärbeverfahren oder diskontinuierlichen und kontinuierlichen Schaumfärbeverfahren.

Die erfindungsgemässe Farbstoffmischung zeichnet sich durch allgemein gute Eigenschaften wie z.B. gute Löslichkeit, Kaltlösungsbeständigkeit, gutes Aufziehverhalten und insbesondere durch gute Kombinierbarkeit mit anderen Farbstoffen sowie gleichmässiges gutes Ziehverhalten auf unterschiedlichen Fasermaterialien aus.

Das zu färbende oder zu bedruckende Textilmaterial kann in verschiedenen Verarbeitungsformen vorliegen, wie z.B. als Faser, Garn, Gewebe oder Gewirke und insbesondere in Form von Teppichen.

In der erfindungsgemässen Farbstoffmischung liegen die Farbstoffe der Formeln (1), (2), (3) und (4) entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die Farbstoffmischung enthält in der Regel weitere Zusätze wie z.B. Kochsalz oder Dextrin.

Die Färbeflotten oder Druckpasten können ebenfalls weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker wie z.B. Alginate und Celluloseäther, enthalten.

In den folgenden Beispielen stehen Teile für Gewichtsteile. Die Temperaturen sind in Celsiusgraden angegeben. Die Beziehung zwischen Gewichtsteilen und Volumenteilen ist dieselbe wie diejenige zwischen Gramm und Kubikzentimeter.

Beispiel 1: Zur Herstellung der Farbstoffmischung, die einen Farbstoff der Formel

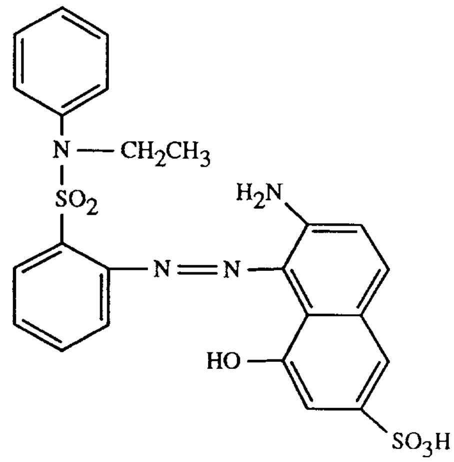

(101)

und einen Farbstoff der Formel

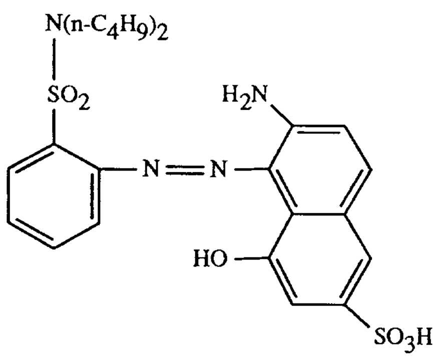

(103) oder

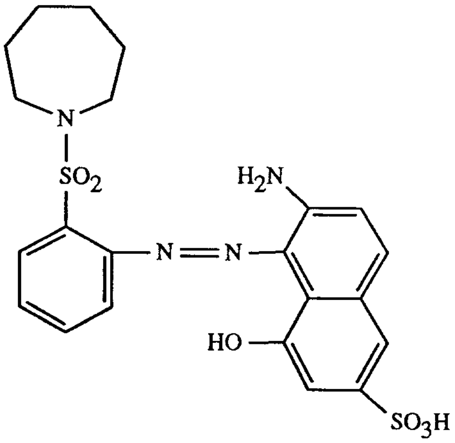

(104) oder

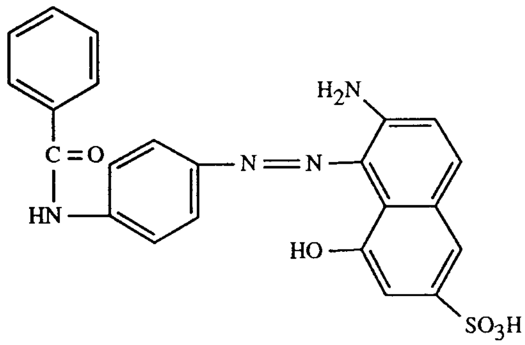

(105) oder

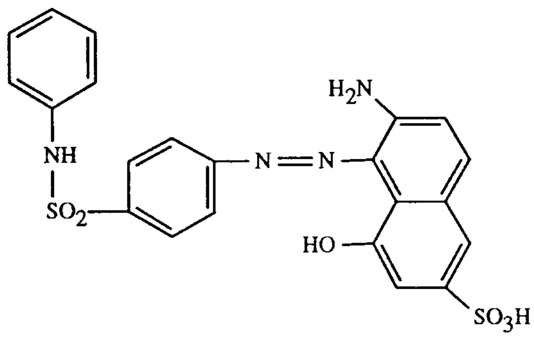

(106) oder

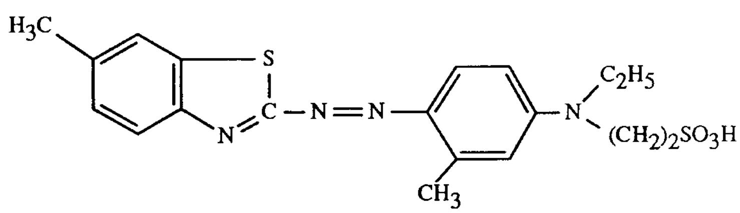

(107) oder

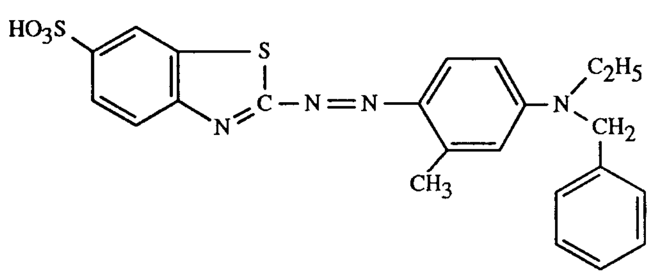

(108) oder

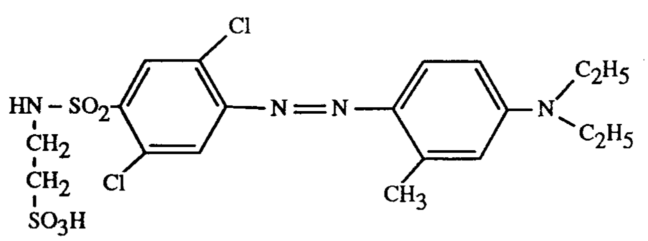

(109) oder

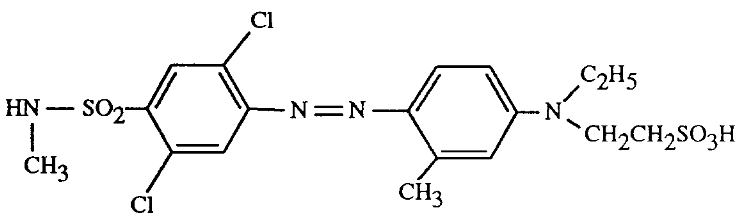

(110) oder

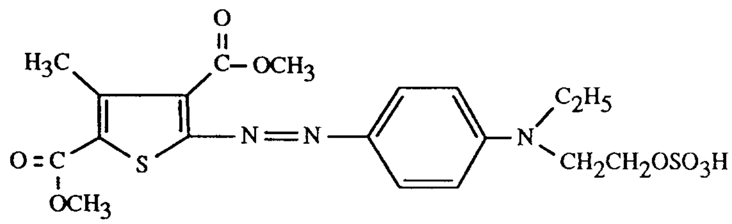

(111) oder

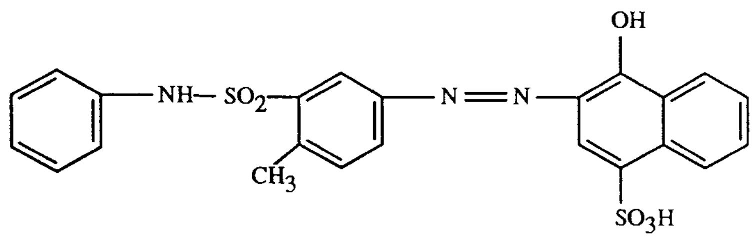

(112) oder

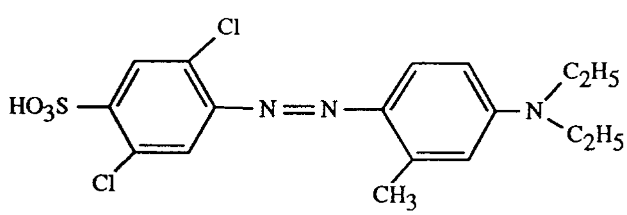

(113)

enthält, werden in einem Mixer

a) 60 Teile des Farbstoffs der Formel (101) und 40 Teile des Farbstoffs der Formel (103) homogen gemischt und ergeben 100 Teile der Mischung, die im folgenden als Farbstoffmischung A bezeichnet wird;

b) 80 Teile des Farbstoffs der Formel (101) und 20 Teile des Farbstoffs der Formel (104) homogen gemischt und ergeben 100 Teile der Mischung, die im folgenden als Farbstoffmischung B bezeichnet wird;

c) 30 Teile des Farbstoffs der Formel (105) und 70 Teile des Farbstoffs der Formel (101) homogen gemischt und ergeben 100 Teile der Mischung, die im folgenden als Farbstoffmischung C bezeichnet wird;

d) 60 Teile des Farbstoffs der Formel (106) und 40 Teile des Farbstoffs der Formel (101) homogen gemischt und ergeben 100 Teile der Mischung, die in, folgenden als Farbstoffmischung D bezeichnet wird;

e) 90 Teile des Farbstoffs der Formel (107) und 10 Teile des Farbstoffs der Formel (101) homogen gemischt und ergeben 100 Teile der Mischung, die im folgenden als Farbstoffmischung E bezeichnet wird;

f) 60 Teile des Farbstoffs der Formel (108) und 40 Teile des Farbstoffs der Formel (101) homogen gemischt und ergeben 100 Teile der Mischung, die im folgenden als Farbstoffmischung F bezeichnet wird;

g) 30 Teile des Farbstoffs der Formel (101) und 70 Teile des Farbstoffs der Formel (109) homogen gemischt und ergeben 100 Teile der Mischung, die im folgenden als Farbstoffmischung G bezeichnet

wird;

h) 60 Teile des Farbstoffs der Formel (101) und 40 Teile des Farbstoffs der Formel (110) homogen gemischt und ergeben 100 Teile der Mischung, die im folgenden als Farbstoffmischung H bezeichnet wird;

i) 80 Teile des Farbstoffs der Formel (101) und 20 Teile des Farbstoffs der Formel (111) homogen gemischt und ergeben 100 Teile der Mischung, die im folgenden als Farbstoffmischung I bezeichnet wird;

k) 30 Teile des Farbstoffs der Formel (112) und 70 Teile des Farbstoffs der Formel (101) homogen gemischt und ergeben 100 Teile der Mischung, die im folgenden als Farbstoffmischung K bezeichnet wird;

l) 10 Teile des Farbstoffs der Formel (113) und 90 Teile des Farbstoffs der Formel (101) homogen gemischt und ergeben 100 Teile der Mischung, die im folgenden als Farbstoffmischung L bezeichnet wird.

Beispiel 2: Man färbt 10 Teile Polyamid 6.6-Fasermaterial (Helancatrikot) in 500 Teilen einer wässrigen Flotte, die 2g/l Ammonacetat enthält und mit Essigsäure auf pH 5 gestellt wird. Als Farbstoffe werden 0,18 % der roten Farbstoffmischung A gemäss Beispiel 1a), 0,18 % des gelben Farbstoffs der Formel

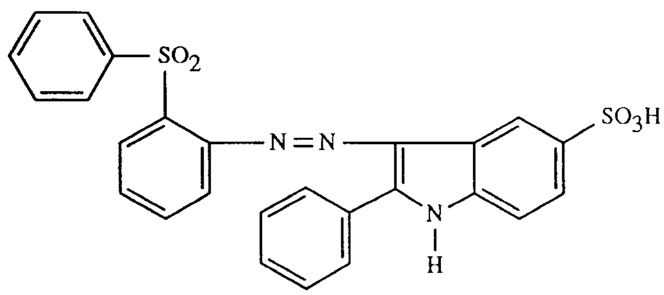

(114)

und 0,077 % des blauen Farbstoffs der Formel

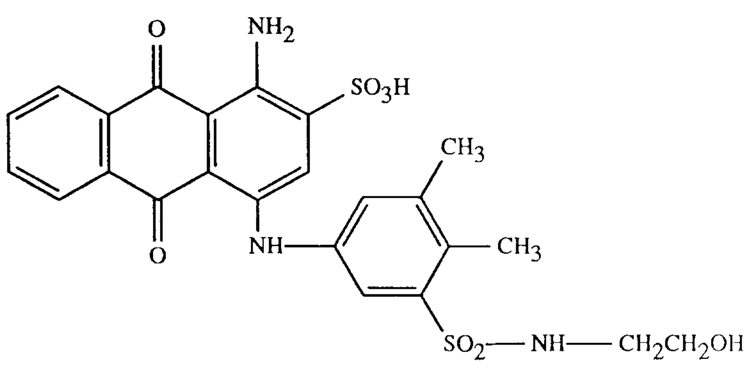

(115)

verwendet, wobei sich die Mengenangaben auf das Fasergewicht beziehen. Die Färbedauer bei einer Temperatur von 60 bis 98° beträgt 30 bis 90 Minuten. Das gefärbte Polyamid 6.6-Fasermaterial wird anschliessend herausgenommen und wie üblich gespült und getrocknet. Man erhält ein in rotstichig braunem Farbton völlig egal gefärbtes Gewebestück.

Beispiele 3 bis 12: Verwendet man anstelle von 0,18 % der roten Farbstoffmischung A und 0,18 % des gelben Farbstoffs der Formel (114) sowie 0,077 % des blauen Farbstoffs der Formel (115) die in der folgenden Tabelle 1 angegebenen Farbstoffe der Formeln (114) und (115) sowie die Farbstoffmischungen aus Beispiel 1, so erhält man die in dem angegebenen Farbton völlig egal gefärbten Gewebestücke.

Tabelle 1

| Beispiel | verwendete Farbstoffe | Farbton |
|---|---|---|
| 3 | 0,04 % der Farbstoffmischung B<br>0,25 % des Farbstoffs der Formel (114)<br>0,14 % des Farbstoffs der Formel (115) | oliv |
| 4 | 0,12 % der Farbstoffmischung C<br>0,27 % des Farbstoffs der Formel (114)<br>0,13 % des Farbstoffs der Formel (115) | neutrales braun |
| 5 | 0,17 % der Farbstoffmischung D<br>0,18 % des Farbstoffs der Formel (114)<br>0,07 % des Farbstoffs der Formel (115) | rotstichig braun |
| 6 | 0,036 % der Farbstoffmischung E<br>0,25 % des Farbstoffs der Formel (114)<br>0,124 % des Farbstoffs der Formel (115) | oliv |
| 7 | 0,25 % der Farbstoffmischung F<br>0,04 % des Farbstoffs der Formel (114)<br>0,14 % des Farbstoffs der Formel (115) | oliv |
| 8 | 0,12 % der Farbstoffmischung G<br>0,27 % des Farbstoffs der Formel (114)<br>0,13 % des Farbstoffs der Formel (115) | neutrales braun |
| 9 | 0,17 % der Farbstoffmischung H<br>0,18 % des Farbstoffs der Formel (114)<br>0,07 % des Farbstoffs der Formel (115) | rotstichig braun |

Tabelle 1 (Fortsetzung)

| Beispiel | verwendete Farbstoffe | Farbton |
|---|---|---|
| 10 | 0,036 % der Farbstoffmischung I<br>0,25 % des Farbstoffs der Formel (114)<br>0,124 % des Farbstoffs der Formel (115) | oliv |
| 11 | 0,25 % der Farbstoffmischung K<br>0,04 % des Farbstoffs der Formel (114)<br>0,14 % des Farbstoffs der Formel (115) | oliv |
| 12 | 0,18 % der Farbstoffmischung L<br>0,18 % des Farbstoffs der Formel (114)<br>0,08 % des Farbstoffs der Formel (115) | rotstichig braun |

Beispiel 13: Man färbt 10 Teile Polyamid 6,6-Garn in 400 Teilen einer wässrigen Flotte, die 1,5 g/l Ammonacetat enthält und mit Essigsäure auf pH 5,5 gestellt wird. Als Farbstoffe werden 0,12 % der Farbstoffmischung A, 0,27 % des Farbstoffs der Formel (114) und 0,13 % des Farbstoffs der Formel (115) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral braunem Farbton gefärbtes Garn.

Beispiel 14: (Teppichausziehverfahren):
Ein Baumfärbeapparat (Labor-Stückfärbeapparat, Modell 10 der Firma Rudolf Then) besteht in seinen Hauptteilen aus dem liegenden Färbekessel mit Kühlmantel, der mit dem Nebenkessel mit seiner Spezial-Umkehrpumpe zu einem Zirkulationssystem verbunden ist.

In diesen Färbeapparat wird ein Warenbaum eingeführt, der mit einer Polyamid-6 Schlingenflor-Teppichware von 50 cm Breite, 135 cm Länge und einem Gewicht von 380 g bestückt wurde. In den Nebenkessel wurden 6 Liter enthärtetes Wasser eingefüllt und 60 ml 2n Natronlauge zugegeben. Durch Öffnen der entsprechenden Ventile (Nebenkessel, bzw. Verbindungsleitungen, Pumpe/Färbekessel) strömt die Flotte aus dem Nebenkessel mit eigenem Gefälle in den Färbekessel, dabei fliesst die verdrängte Luft durch Entlüftungsleitung in den Nebenkessel ab. Nach Füllung des Färbeapparates bleibt im Nebenkessel ein Flottenrest von ca. 5 cm Höhe, danach wird die Umwälzpumpe eingeschaltet. Zur Kontrolle des pH-Wertes wurde in die Rohrleitung zwischen Färbe- und Nebenkessel (Fliessrichtung) eine Bohrung angebracht und eine kombinierte Glaselektrode eingeführt. Die Färbeflotte zirkuliert während des gesamten Färbeprozesses von innen nach aussen, dabei beträgt das Druckgefälle 0,1 bis 0,2 Bar, die Förderleistung der Pumpe ca. 6 Liter pro Minute. Die Flotte wird auf 98° erhitzt und 7,6 g eines anionischen faseraffinen Egalisiermittels, gelöst in 100 ml Wasser, innerhalb von 5 Minuten in den Nebenkessel zugegeben.

Die Färbetemperatur wird auf 97 bis 98° eingestellt, der pH-Wert beträgt 10,7. Der pH-Wert einer entnommenen, auf 20° abgekühlten Probe beträgt 11,9.

Nun werden 2,5 g der roten Farbstoffmischung A und 1,8 g des gelben Farbstoffs der Formel (114), beide gelöst in 200 ml heissem Wasser, innerhalb von 10 Minuten aus einem Tropftrichter in den Nebenkessel zulaufen gelassen. Nach 30 Minuten werden mittels einer Kolbenbürette während 10 Minuten mit einer Geschwindigkeit von 5,5 ml pro Minute und während weiteren 20 Minuten mit einer Geschwindigkeit von 2,25 ml pro Minute, insgesamt 100 ml 1n Schwefelsäure zudosiert.

Der pH-Wert beträgt nach weiteren 10 Minuten 3,8. Das Färbebad ist erschöpft, d.h. die Farbstoffe sind zu über 99 % auf das Färbegut aufgezogen. Die Beheizung wird abgestellt und mit Hilfe der indirekten Kühlung der Färbeflotte auf 60° gekühlt. Während dieser Zeit erhöht sich der pH-Wert auf 3,9. Die fast

wasserklare Flotte wird in den Nebenkessel zurückgepumpt und der Warenbaum herausgenommen. Das Teppichmaterial wird abgewickelt, zentrifugiert und getrocknet. Die Polyamid-6-Schlingen-Teppichware ist flächenegal orange gefärbt.

## Patentansprüche

**Patentansprüche für folgende Vertragsstaaten : BE, CH, DE, DK, FR, GB, IT, LI, NL**

1. Farbstoffmischung, dadurch gekennzeichnet, dass sie einen Farbstoff der Formel

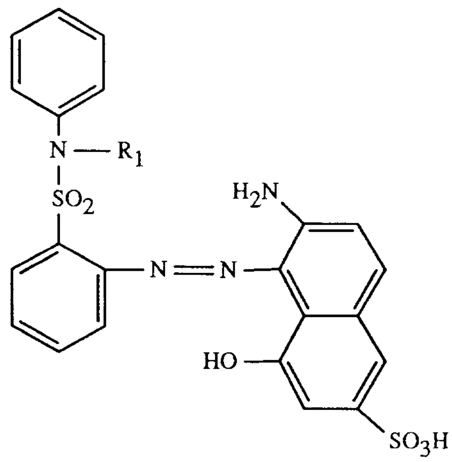

(1),

worin $R_1$ Methyl oder Aethyl ist, und mindestens einen Farbstoff der Formeln (2) bis (4)

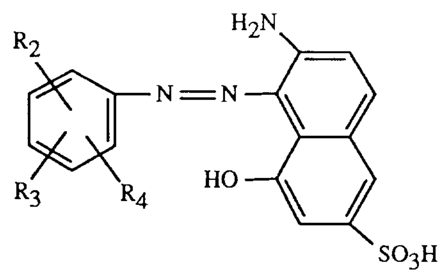

(2),

worin $R_2$ gegebenenfalls im Phenylring durch Halogen substituiertes Benzoylamino, 1-Azacycloheptan-N-sulfonyl oder

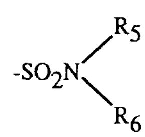

ist, wobei $R_5$ $C_1$-$C_8$-Alkyl oder gegebenenfalls durch $C_1$-$C_4$-Alkyl substituiertes Phenyl und $R_6$ Wasserstoff ist oder $R_5$ und $R_6$ $C_1$-$C_8$-Alkyl sind, $R_3$ Wasserstoff, Halogen oder $C_1$-$C_8$-Alkyl und $R_4$ Wasserstoff oder Halogen ist,

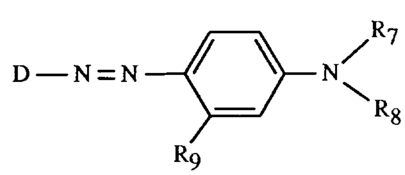

(3),

worin D gegebenenfalls substituiertes Phenyl, Thiophenyl oder Benzthiazolyl, $R_7$ $C_1$-$C_8$-Alkyl, $R_8$ gegebenenfalls substituiertes $C_1$-$C_8$-Alkyl und $R_9$ Wasserstoff oder $C_1$-$C_4$-Alkyl ist, und

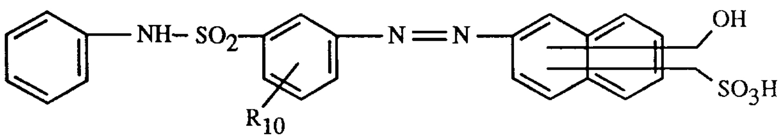

(4),

worin $R_{10}$ $C_1$-$C_4$-Alkyl ist, enthält.

2. Farbstoffmischung gemäss Anspruch 1, dadurch gekennzeichnet, dass sie einen Farbstoff der Formel (2), worin $R_2$ $-SO_2N(n\text{-}C_4H_9)_2$, 1-Azacycloheptan-N-sulfonyl, gegebenenfalls im Phenylring durch Chlor substituiertes Benzoylamino oder gegebenenfalls im Phenylring durch Methyl substituiertes Phenylaminosulfonyl, $R_3$ Wasserstoff, Methyl oder Chlor und $R_4$ Wasserstoff oder Chlor ist, enthält.

3. Farbstoffmischung gemäss einem der Ansprüche 1 und 2, dadurch gekennzeichnet, dass sie einen Farbstoff der Formel (3), worin D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_7$ Aethyl, $R_8$ Aethyl, β-Sulfatoäthyl,

$$-(CH_2)_{2\text{-}3}SO_3H$$

oder Benzyl und $R_9$ Wasserstoff oder Methyl ist, enthält.

4. Farbstoffmischung gemäss einem der Ansprüche 1 bis 3, dadurch gekennzeichnet, dass sie als Farbstoff der Formel (4) einen Farbstoff der Formel

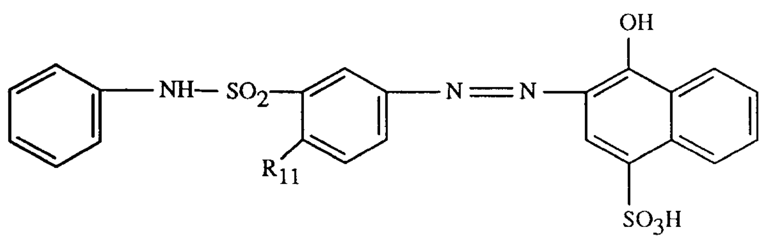

(5),

worin $R_{11}$ Methyl ist, enthält.

5. Farbstoffmischung gemäss Anspruch 1, dadurch gekennzeichnet, dass sie einen Farbstoff der Formel (2), worin $R_2$ $-SO_2N(n\text{-}C_4H_9)_2$, 1-Azacycloheptan-N-sulfonyl, gegebenenfalls im Phenylring durch Chlor substituiertes Benzoylamino oder gegebenenfalls im Phenylring durch Methyl substituiertes Phenylaminosulfonyl, $R_3$ Wasserstoff, Methyl oder Chlor und $R_4$ Wasserstoff oder Chlor ist, oder einen Farbstoff der Formel (3), worin D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_7$ Aethyl, $R_8$ Aethyl, β-Sulfatoäthyl,

$$-(CH_2)_{2\text{-}3}SO_3H$$

oder Benzyl und $R_9$ Wasserstoff oder Methyl ist, oder einen Farbstoff der Formel

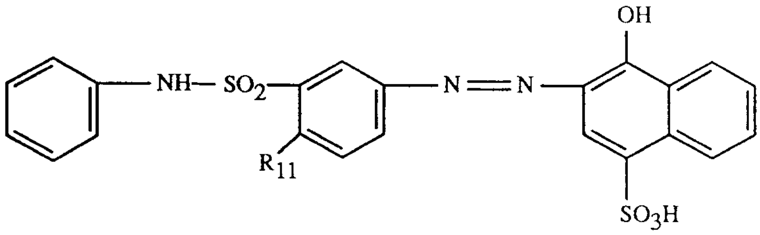

(5),

worin $R_{11}$ Methyl ist, enthält.

**6.** Farbstoffmischung gemäss Anspruch 1, dadurch gekennzeichnet, dass sie einen Farbstoff der Formel (1), worin $R_1$ Methyl oder Aethyl, insbesondere Aethyl, ist, und mindestens einen Farbstoff der Formeln (6) bis (16)

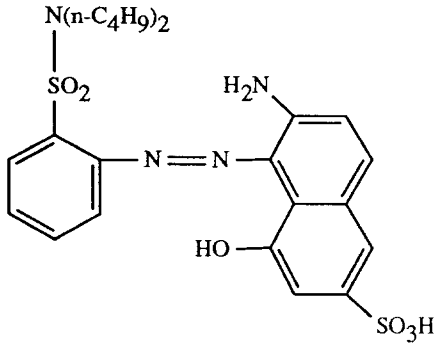

(6),

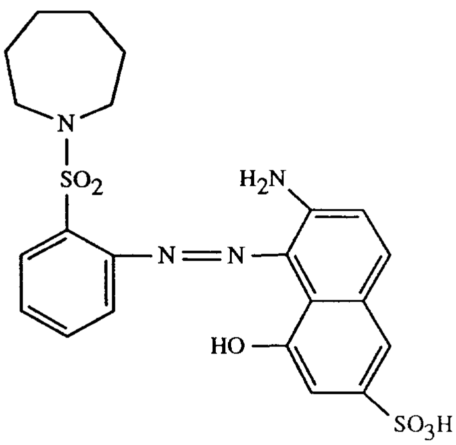

(7),

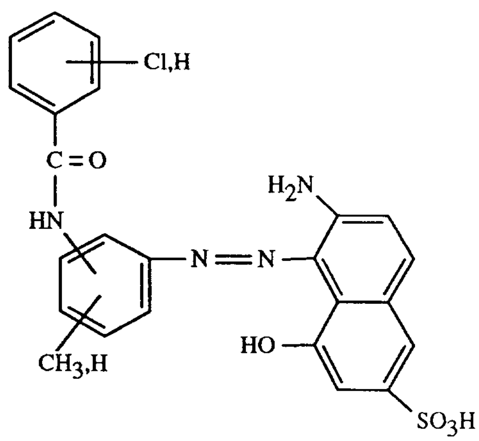

(8),

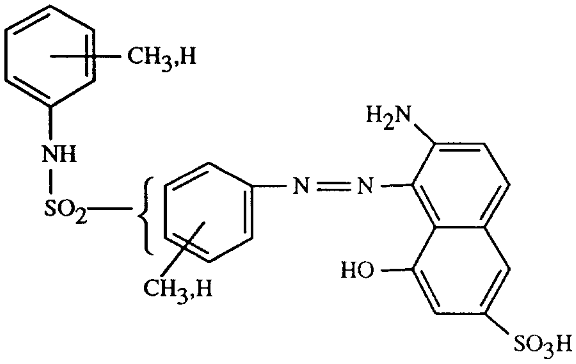

(9),

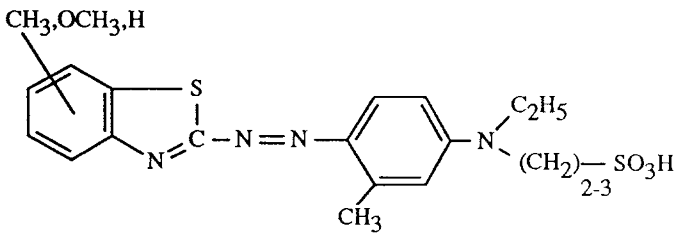

(10),

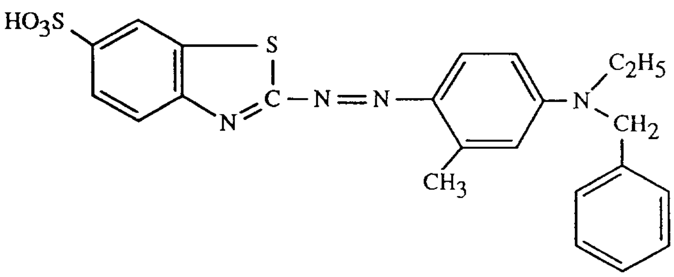

(11),

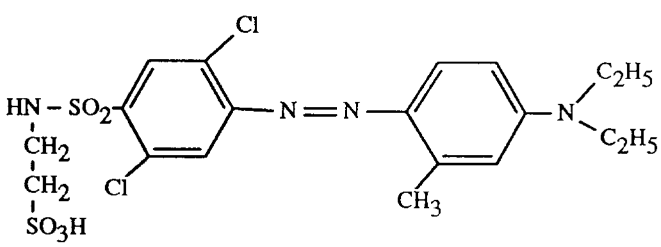

(12),

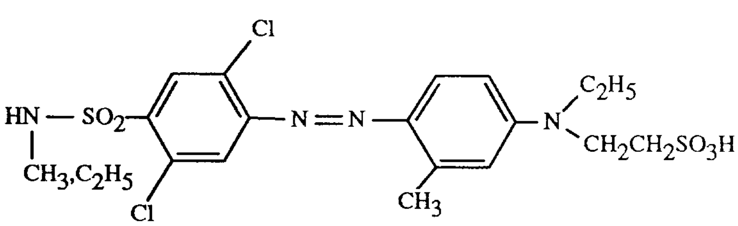

(13),

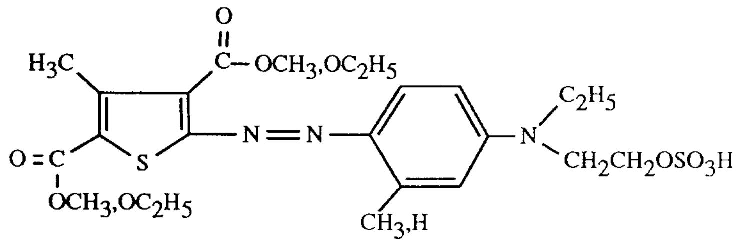

(14),

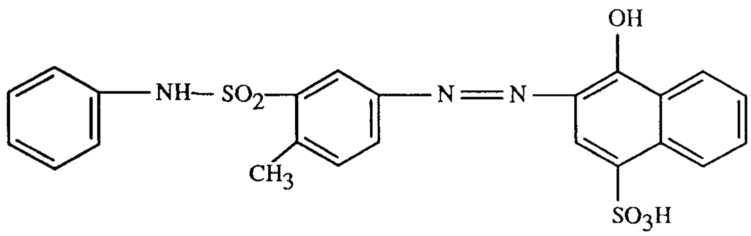

(15) und

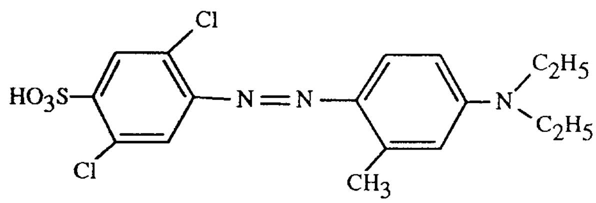

(16)

enthält.

7. Farbstoffmischung gemäss einem der Ansprüche 1 bis 6, dadurch gekennzeichnet, dass das Verhältnis der Farbstoffe der Formeln (1) und (2) oder (1) und (3) oder (1) und (4) 10:90 bis 90:10, insbesondere 40:60 bis 60:40, vorzugsweise 45:55 bis 55:45 ist.

8. Verfahren zum Färben und Bedrücken von natürlichen und synthetischen Polyamidmaterialien mit einer Farbstoffmischung, dadurch gekennzeichnet, dass man eine Farbstoffmischung gemäss einem der Ansprüche 1 bis 7 verwendet.

9. Verfahren zum Färben und Bedrücken von natürlichen und synthetischen Polyamidmaterialien unter Verwendung der Farbstoffmischung gemäss einem der Ansprüche 1 bis 7 in Kombination mit anderen Farbstoffen.

10. Verfahren gemäss Anspruch 9 zum Trichromie-Färben oder -Bedrucken, dadurch gekennzeichnet, dass man eine Farbstoffmischung gemäss einem der Ansprüche 1 bis 7 in Kombination mit mindestens einem gelben oder orangen Farbstoff und mindestens einem blauen Farbstoff verwendet.

11. Verwendung der Farbstoffmischung gemäss Anspruch 1 zum Färben und Bedrucken von natürlichen und synthetischen Polyamidmaterialien.

12. Färbe- bzw. Druckpräparate, die eine Farbstoffmischung gemäss den Ansprüchen 1 bis 7 enthalten.

13. Das gemäss einem der Ansprüche 8 bis 10 oder 12 gefärbte oder bedruckte Material, insbesondere das Textilmaterial.

**Patentansprüche für folgenden Vertragsstaat : ES**

1. Verfahren zur Herstellung von Farbstoffmischungen, dadurch gekennzeichnet, dass man einen Farbstoff der Formel

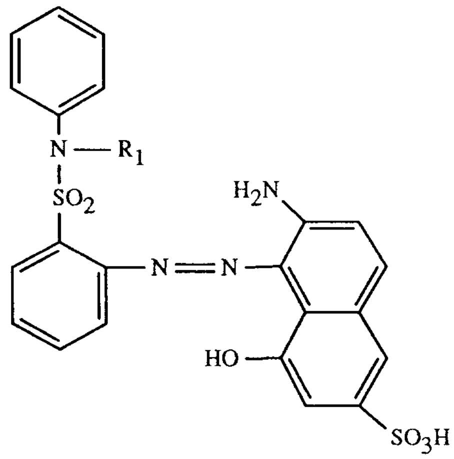

(1),

worin $R_1$ Methyl oder Aethyl ist, mit mindestens einem Farbstoff der Formeln (2) bis (4)

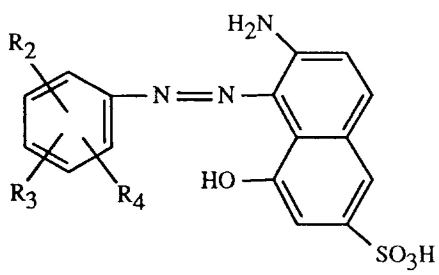

(2),

worin $R_2$ gegebenenfalls im Phenylring durch Halogen substituiertes Benzoylamino, 1-Azacycloheptan-N-sulfonyl oder

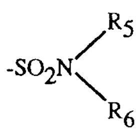

ist, wobei $R_5$ $C_1$-$C_8$-Alkyl oder gegebenenfalls durch $C_1$-$C_4$-Alkyl substituiertes Phenyl und $R_6$ Wasserstoff ist oder $R_5$ und $R_6$ $C_1$-$C_8$-Alkyl sind, $R_3$ Wasserstoff, Halogen oder $C_1$-$C_8$-Alkyl und $R_4$ Wasserstoff oder Halogen ist,

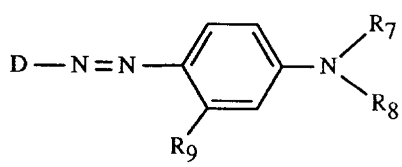

(3),

worin D gegebenenfalls substituiertes Phenyl, Thiophenyl oder Benzthiazolyl, $R_7$ $C_1$-$C_8$-Alkyl, $R_8$ gegebenenfalls substituiertes $C_1$-$C_8$-Alkyl und $R_9$ Wasserstoff oder $C_1$-$C_4$-Alkyl ist,
und

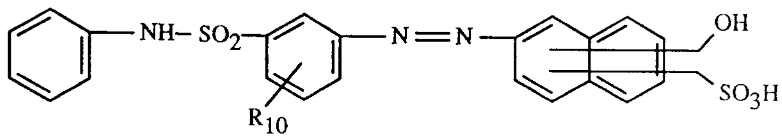

(4),

worin $R_{10}$ $C_1$-$C_4$-Alkyl ist, mischt.

**2.** Verfahren gemäss Anspruch 1, dadurch gekennzeichnet, dass man einen Farbstoff der Formel (2), worin $R_2$ $-SO_2N(n-C_4H_9)_2$, 1-Azacycloheptan-N-sulfonyl, gegebenenfalls im Phenylring durch Chlor substituiertes Benzoylamino oder gegebenenfalls im Phenylring durch Methyl substituiertes Phenylaminosulfonyl, $R_3$ Wasserstoff, Methyl oder Chlor und $R_4$ Wasserstoff oder Chlor ist, verwendet.

**3.** Verfahren gemäss einem der Ansprüche 1 und 2, dadurch gekennzeichnet, dass man einen Farbstoff der Formel (3), worin D durch Chlor, Sulfo, Methylaminosulfonyl, Aethylaminosulfonyl oder $\beta$-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_7$ Aethyl, $R_8$ Aethyl, $\beta$-Sulfatoäthyl,

$$-(CH_2)_{2-3}SO_3H$$

oder Benzyl und $R_9$ Wasserstoff oder Methyl ist, verwendet.

**4.** Verfahren gemäss einem der Ansprüche 1 bis 3, dadurch gekennzeichnet, dass man als Farbstoff der Formel (4) einen Farbstoff der Formel

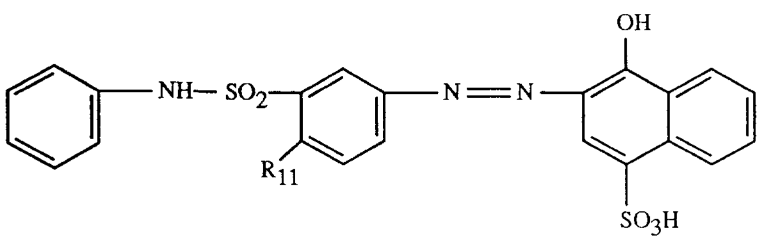

(5),

worin $R_{11}$ Methyl ist, verwendet.

**5.** Verfahren gemäss Anspruch 1, dadurch gekennzeichnet, dass man einen Farbstoff der Formel (2), worin $R_2$ $-SO_2N(n-C_4H_9)_2$, 1-Azacycloheptan-N-sulfonyl, gegebenenfalls im Phenylring durch Chlor substituiertes Benzoylamino oder gegebenenfalls im Phenylring durch Methyl substituiertes Phenylaminosulfonyl, $R_3$ Wasserstoff, Methyl oder Chlor und $R_4$ Wasserstoff oder Chlor ist, oder einen Farbstoff der Formel (3), worin D durch Chlor, Sulfo, Methylaminosulfonyl, Aethylaminosulfonyl oder $\beta$-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, $R_7$ Aethyl, $R_8$ Aethyl, $\beta$-Sulfatoäthyl,

$$-(CH_2)_{2-3}SO_3H$$

oder Benzyl und $R_9$ Wasserstoff oder Methyl ist, oder einen Farbstoff der Formel

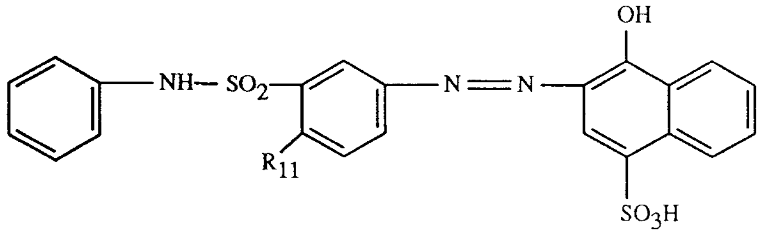

(5),

worin $R_{11}$ Methyl ist, verwendet.

**6.** Verfahren gemäss Anspruch 1, dadurch gekennzeichnet, dass man einen Farbstoff der Formel (1), worin $R_1$ Methyl oder Aethyl, insbesondere Aethyl, ist, mit mindestens einem Farbstoff der Formeln (6) bis (16)

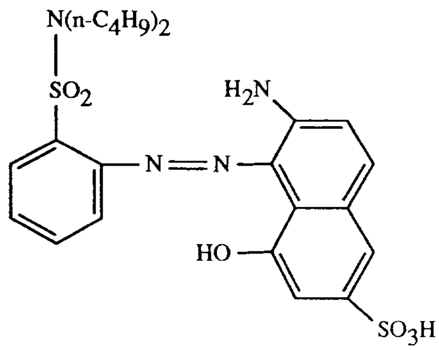

(6),

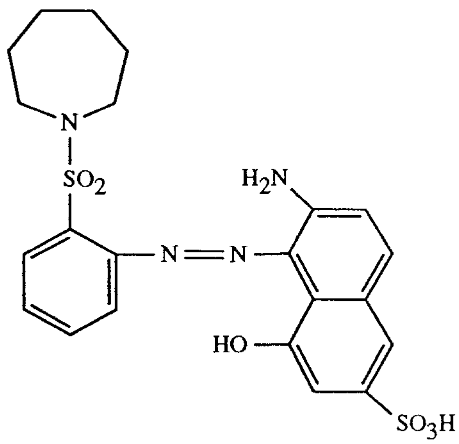

(7),

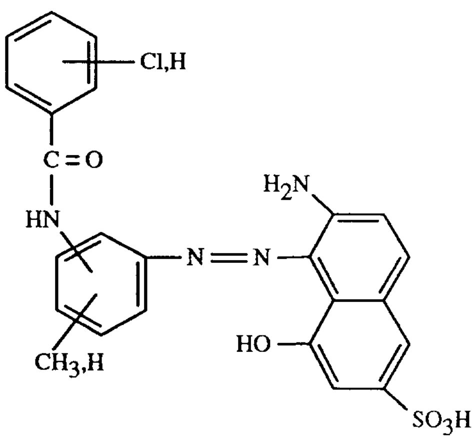

(8),

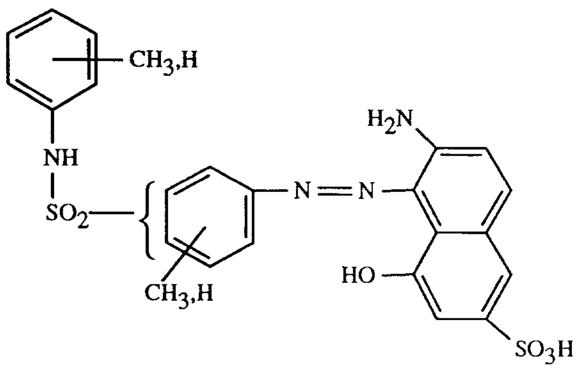

(9),

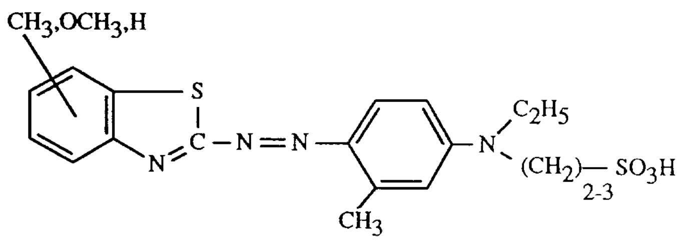

(10),

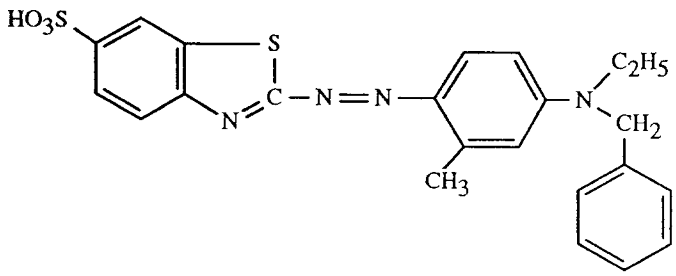

(11),

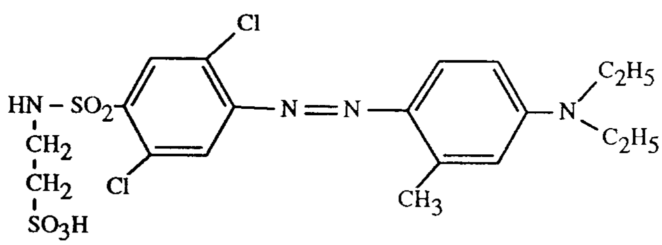

(12),

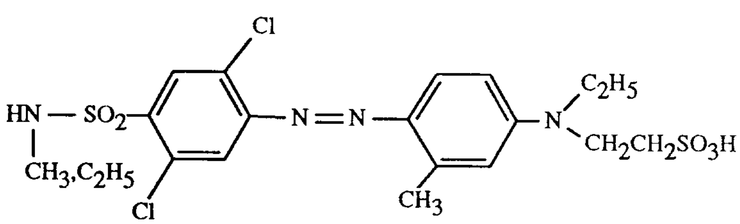

(13),

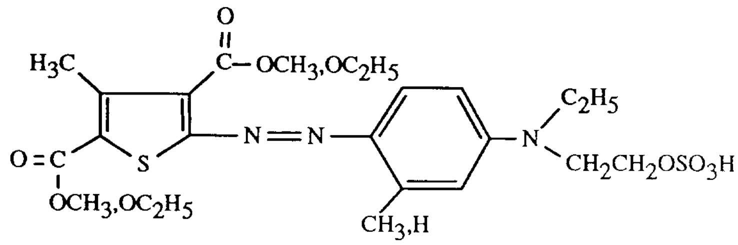

(14),

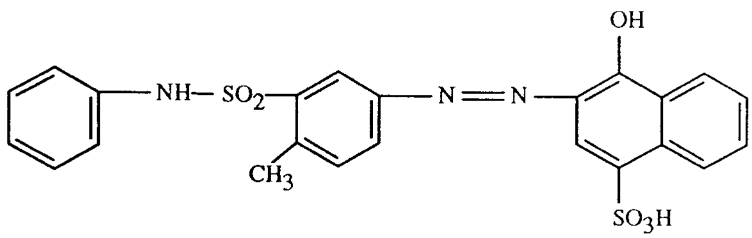

(15) und

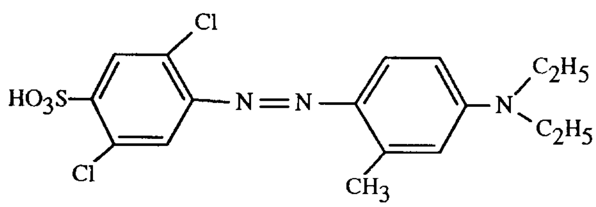

(16)

mischt.

7. Verfahren gemäss einem der Ansprüche 1 bis 6, dadurch gekennzeichnet, dass das Verhältnis der verwendeten Farbstoffe der Formeln (1) und (2) oder (1) und (3) oder (1) und (4) 10:90 bis 90:10, insbesondere 40:60 bis 60:40, vorzugsweise 45:55 bis 55:45, ist.

8. Verfahren zum Färben und Bedrücken von natürlichen und synthetischen Polyamidmaterialien mit einer Farbstoffmischung, dadurch gekennzeichnet, dass man eine gemäss einem der Ansprüche 1 bis 7 erhaltene Farbstoffmischung verwendet.

9. Verfahren zum Färben und Bedrücken von natürlichen und synthetischen Polyamidmaterialien unter Verwendung der gemäss einem der Ansprüche 1 bis 7 erhaltenen Farbstoffmischung in Kombination mit anderen Farbstoffen.

10. Verfahren gemäss Anspruch 9 zum Trichromie-Färben oder -Bedrucken, dadurch gekennzeichnet, dass man eine gemäss einem der Ansprüche 1 bis 7 erhaltene Farbstoffmischung in Kombination mit mindestens einem gelben oder orangen Farbstoff und mindestens einem blauen Farbstoff verwendet.

11. Verwendung der gemäss Anspruch 1 erhaltenen Farbstoffmischung zum Färben und Bedrücken von natürlichen und synthetischen Polyamidmaterialien.

**Claims**

**Claims for the following Contracting States : BE, CH, DE, DK, FR, GB, IT, LI, NL**

1. A dye mixture which contains a dye of the formula

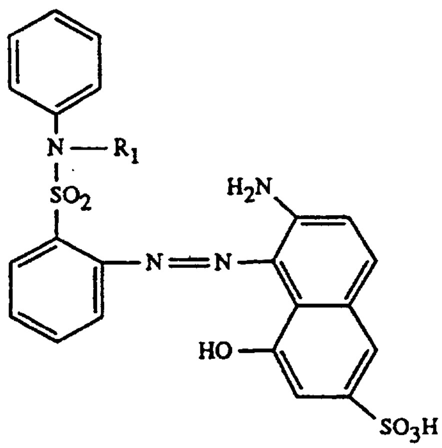

(1),

in which $R_1$ is methyl or ethyl and at least one dye of the formulae (2) to (4)

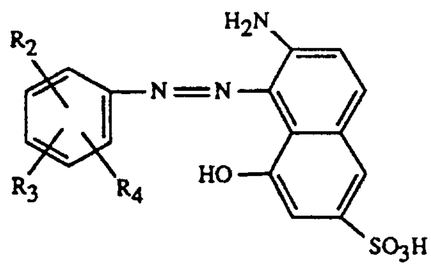

(2),

in which $R_2$ is benzoylamino which is unsubstituted or substituted in the phenyl ring by halogen, or 1-azacycloheptane-N-sulfonyl or

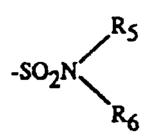

in which $R_5$ is $C_1$-$C_8$alkyl or phenyl which is unsubstituted or substituted by $C_1$-$C_4$alkyl and $R_6$ is hydrogen, or $R_5$ and $R_6$ are $C_1$-$C_8$alkyl, $R_3$ is hydrogen, halogen or $C_1$-$C_8$alkyl, and $R_4$ is hydrogen or halogen,

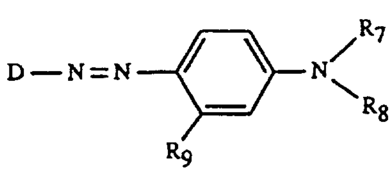

(3),

in which D is substituted or unsubstituted phenyl, thiophenyl or benzothiazolyl, $R_7$ is $C_1$-$C_8$alkyl, $R_8$ is substituted or unsubstituted $C_1$-$C_8$alkyl, and $R_9$ is hydrogen or $C_1$-$C_4$alkyl,
and

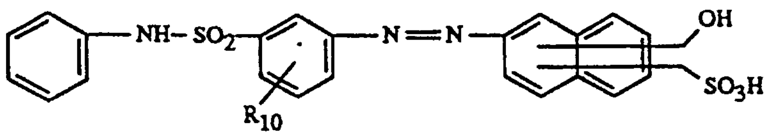

(4),

in which $R_{10}$ is $C_1$-$C_4$alkyl.

2. A dye mixture according to claim 1, which contains a dye of the formula (2) in which $R_2$ is $-SO_2N(n\text{-}C_4H_9)_2$, 1-azacycloheptane-N-sulfonyl, benzoylamino which is unsubstituted or substituted in the phenyl ring by chlorine, or phenylaminosulfonyl which is unsubstituted or substituted in the phenyl ring by methyl, $R_3$ is hydrogen, methyl or chlorine, and $R_4$ is hydrogen or chlorine.

3. A dye mixture according to either of claims 1 and 2, which contains a dye of the formula (3) in which D is phenyl which is substituted by chlorine, sulfo, methylaminosulfonyl, ethylaminosulfonyl or $\beta$-sulfoethylaminosulfonyl, thiophenyl which is substituted by methyl, methoxy- or ethoxycarbonyl, or benzothiophenyl which is unsubstituted or substituted by methyl, methoxy or sulfo, $R_7$ is ethyl, $R_8$ is ethyl, $\beta$-sulfatoethyl,

$$-(CH_2)_{2\text{-}3}SO_3H$$

or benzyl, and $R_9$ is hydrogen or methyl.

4. A dye mixture according to any one of claims 1 to 3, which contains as dye of the formula (4) a dye of the formula

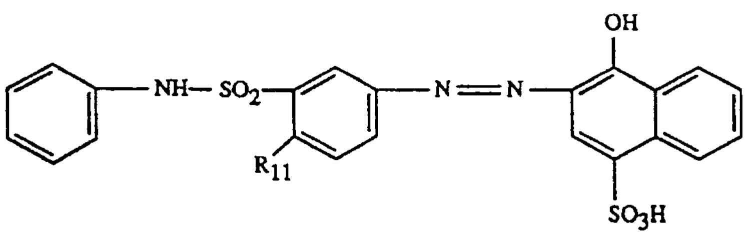

(5),

in which $R_{11}$ is methyl.

5. A dye mixture according to claim 1, which contains a dye of the formula (2) in which $R_2$ is $-SO_2N(n\text{-}C_4H_9)_2$, 1-azacycloheptane-N-sulfonyl, benzoylamino which is unsubstituted or substituted in the phenyl ring by chlorine, or phenylaminosulfonyl which is unsubstituted or substituted in the phenyl ring by methyl, $R_3$ is hydrogen, methyl or chlorine and $R_4$ is hydrogen or chlorine, or a dye of the formula (3) in which D is phenyl which is substituted by chlorine, sulfo, methylaminosulfonyl, ethylaminosulfonyl or $\beta$-sulfoethylaminosulfonyl, thiophenyl which is substituted by methyl, methoxy- or ethoxycarbonyl, or benzothiophenyl which is unsubstituted or substituted by methyl, methoxy or sulfo, $R_7$ is ethyl, $R_8$ is ethyl, $\beta$-sulfatoethyl, $-(CH_2)_{2-3}$- $SO_3$ H or benzyl, and $R_9$ is hydrogen or methyl, or a dye of the formula

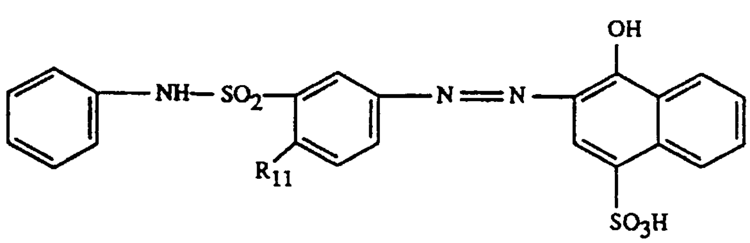

(5),

in which $R_{11}$ is methyl.

6. A dye mixture according to claim 1, which contains a dye of the formula (1) in which $R_1$ is methyl or ethyl, in particular ethyl, and at least one dye of the formulae (6) to (16)

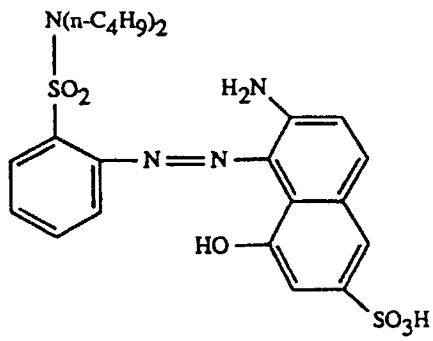

(6),

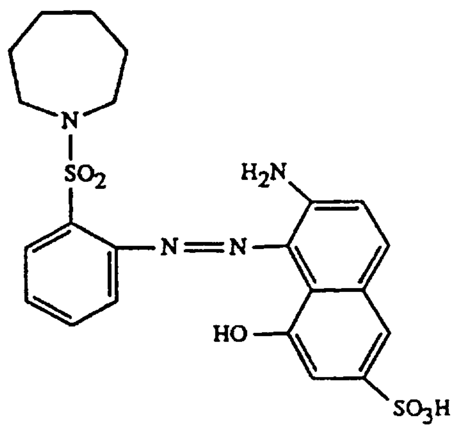

(7),

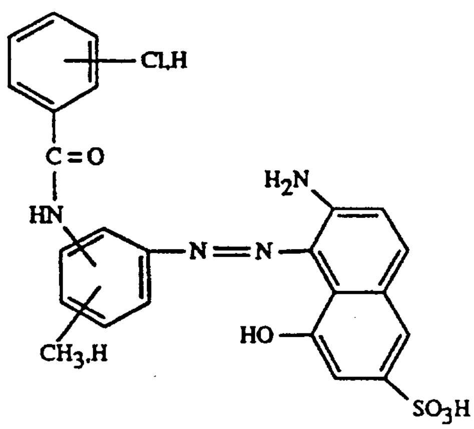

(8),

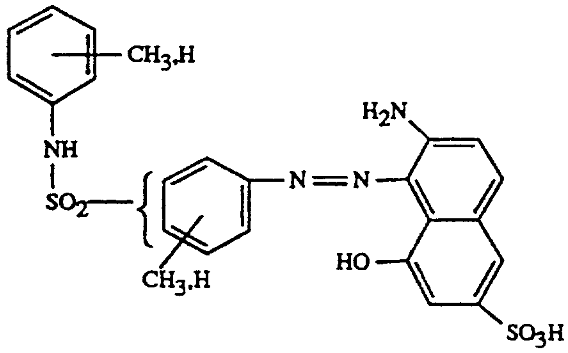

(9),

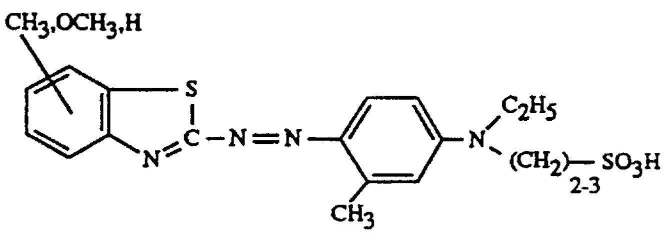

(10),

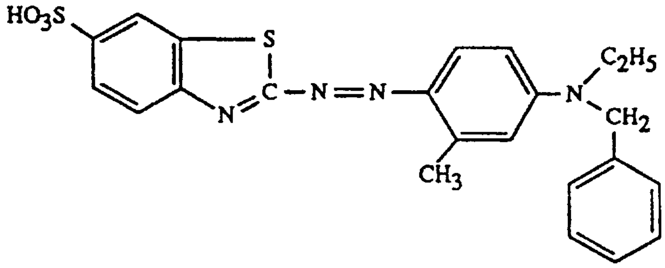

(11),

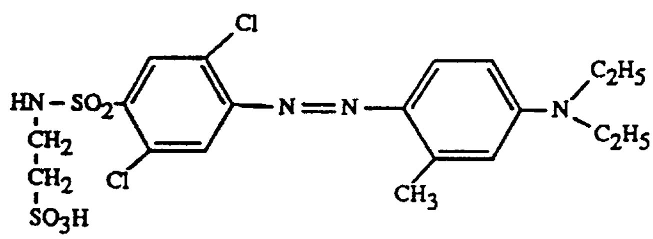

(12),

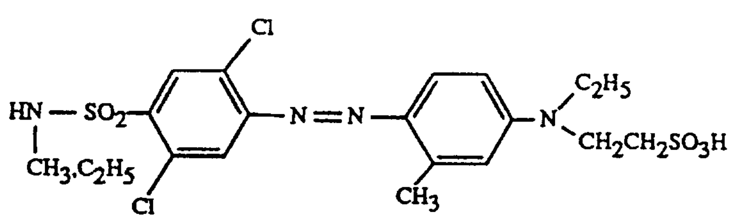

(13),

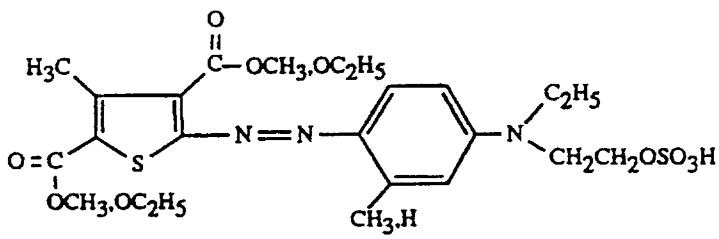

(14),

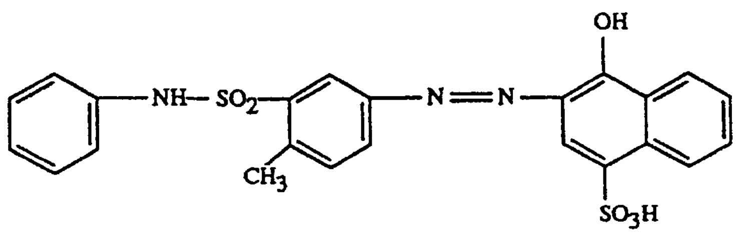

(15) and

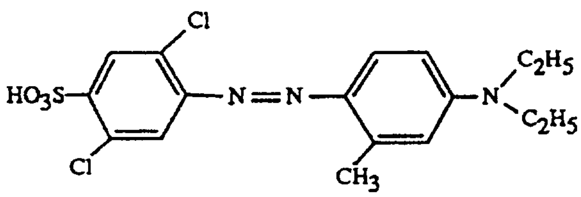

(16).

7. A dye mixture according to any of claims 1 to 6, wherein the ratio of the dyes of the formulae (1) and (2) or (1) and (3) or (1) and (4) is 10:90 to 90:10, in particular 40:60 to 60:40, preferably 45:55 to 55:45.

8. A process for the dyeing and printing of natural and synthetic polyamide materials by means of a dye mixture, wherein a dye mixture according to any of claims 1 to 7 is used.

9. A process for the dyeing and printing of natural and synthetic polyamide materials using a dye mixture according to any of claims 1 to 7 in combination with other dyes.

10. A process according to claim 9 for trichromatic dyeing or printing, wherein a dye mixture according to any of claims 1 to 7 is used in combination with at least one yellow or orange dye and at least one blue dye.

11. Use of a dye mixture according to claim 1 for the dyeing and printing of natural and synthetic polyamide materials.

12. A dyeing or printing preparation containing a dye mixture according to claims 1 to 7.

13. A material dyed or printed according to any of claims 8 to 10 or 12, in particular a textile material.

**Claims for the following Contracting State : ES**

1. A process for preparing a dye mixture, which comprises mixing a dye of the formula

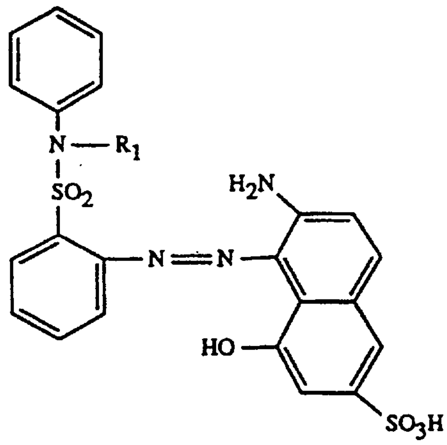

(1),

in which $R_1$ is methyl or ethyl and at least one dye of the formulae (2) to (4)

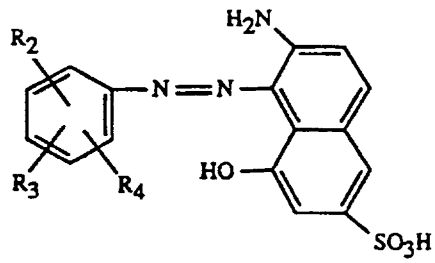

(2),

in which $R_2$ is benzoylamino which is unsubstituted or substituted in the phenyl ring by halogen, or 1-azacycloheptane-N-sulfonyl or

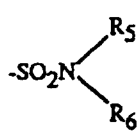

in which $R_5$ is $C_1$-$C_8$alkyl or phenyl which is unsubstituted or substituted by $C_1$-$C_4$alkyl and $R_6$ is hydrogen, or $R_5$ and $R_6$ are $C_1$-$C_8$alkyl, $R_3$ is hydrogen, halogen or $C_1$-$C_8$alkyl, and $R_4$ is hydrogen or halogen,

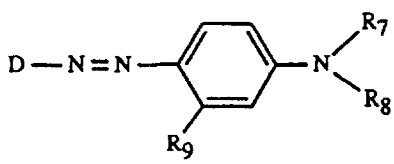

(3),

in which D is substituted or unsubstituted phenyl, thiophenyl or benzothiazolyl, $R_7$ is $C_1$-$C_8$alkyl, $R_8$ is substituted or unsubstituted $C_1$-$C_8$alkyl, and $R_9$ is hydrogen or $C_1$-$C_4$alkyl,

and

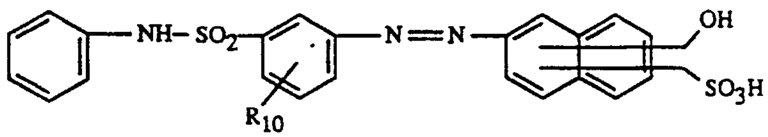

(4),

in which $R_{10}$ is $C_1$-$C_4$alkyl.

2. A process according to claim 1, which comprises using a dye of the formula (2) in which $R_2$ is $-SO_2N-(n-C_4H_9)_2$, 1-azacycloheptane-N-sulfonyl, benzoylamino which is unsubstituted or substituted in the phenyl ring by chlorine, or phenylaminosulfonyl which is unsubstituted or substituted in the phenyl ring by methyl, $R_3$ is hydrogen, methyl or chlorine, and $R_4$ is hydrogen or chlorine.

3. A process according to either of claims 1 and 2, which comprises using a dye of the formula (3) in which D is phenyl which is substituted by chlorine, sulfo, methylaminosulfonyl, ethylaminosulfonyl or β-sulfoethylaminosulfonyl, thiophenyl which is substituted by methyl, methoxy- or ethoxycarbonyl, or benzothiophenyl which is unsubstituted or substituted by methyl, methoxy or sulfo, $R_7$ is ethyl, $R_8$ is ethyl, β-sulfatoethyl,

$$-(CH_2)_{2-3}\ SO_3H$$

or benzyl, and $R_9$ is hydrogen or methyl.

4. A process according to any of claims 1 to 3, which comprises using as dye of the formula (4) a dye of the formula

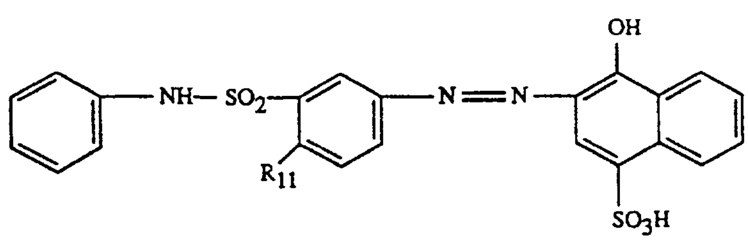

(5),

in which $R_{11}$ is methyl.

5. A process according to claim 1, which comprises using a dye of the formula (2) in which $R_2$ is $-SO_2N-(n-C_4H_9)_2$, 1-azacycloheptane-N-sulfonyl, benzoylamino which is unsubstituted or substituted in the phenyl ring by chlorine, or phenylaminosulfonyl which is unsubstituted or substituted in the phenyl ring by methyl, $R_3$ is hydrogen, methyl or chlorine and $R_4$ is hydrogen or chlorine, or a dye of the formula (3) in which D is phenyl which is substituted by chlorine, sulfo, methylaminosulfonyl, ethylaminosulfonyl or β-sulfoethylaminosulfonyl, thiophenyl which is substituted by methyl, methoxy- or ethoxycarbonyl, or benzothiophenyl which is unsubstituted or substituted by methyl, methoxy or sulfo, $R_7$ is ethyl, $R_8$ is ethyl, β-sulfatoethyl,

$$-(CH_2)_{2-3}\ SO_3H$$

or benzyl, and $R_9$ is hydrogen or methyl, or a dye of the formula

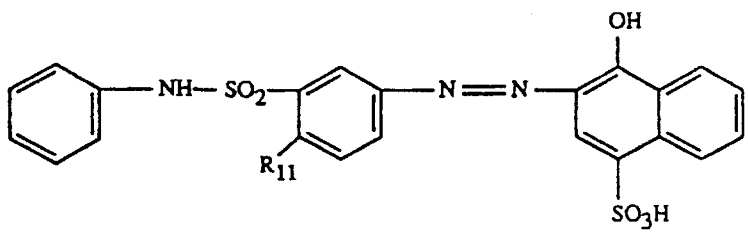

(5),

in which $R_{11}$ is methyl.

**6.** A process according to claim 1, which comprises mixing a dye of the formula (1) in which $R_1$ is methyl or ethyl, in particular ethyl, and at least one dye of the formulae (6) to (16)

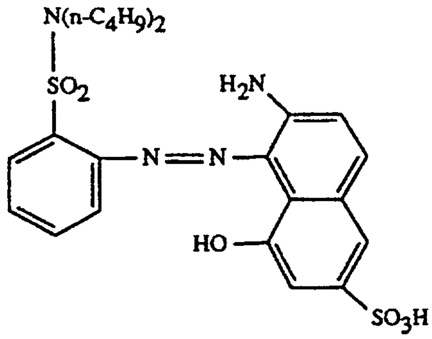

(6),

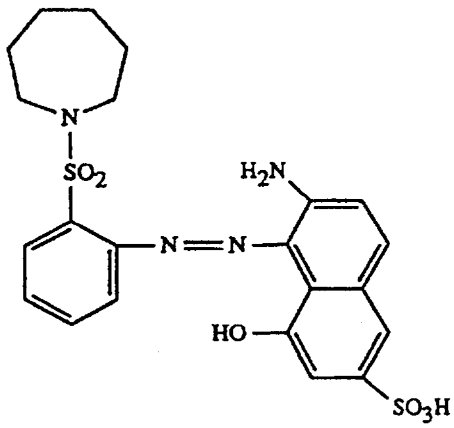

(7),

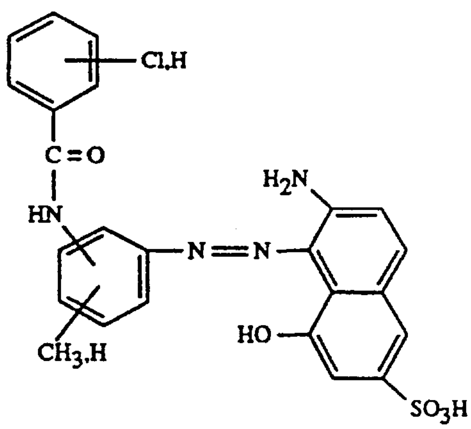

(8),

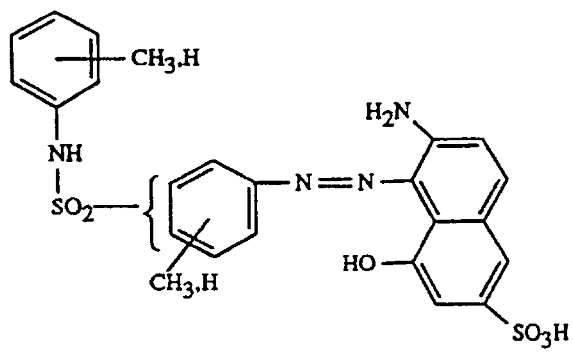

(9),

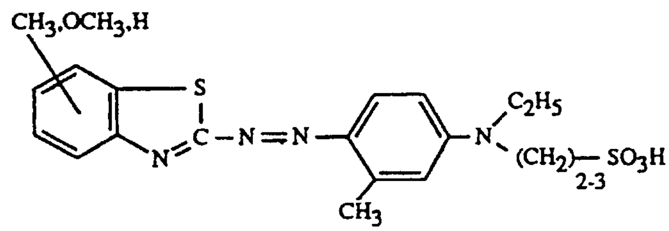

(10),

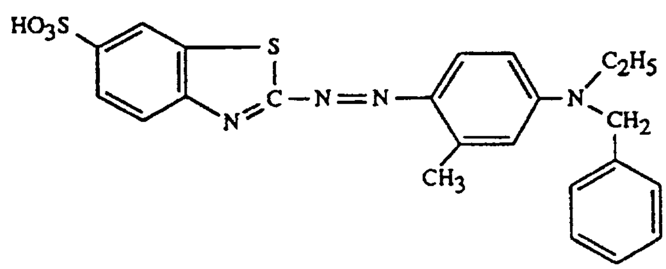

(11),

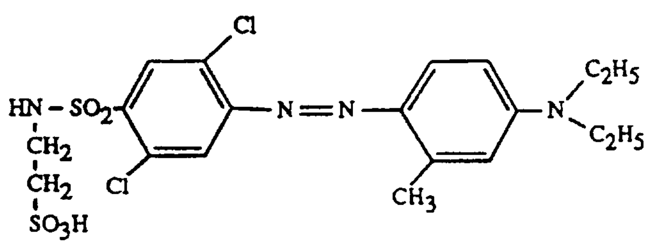

(12),

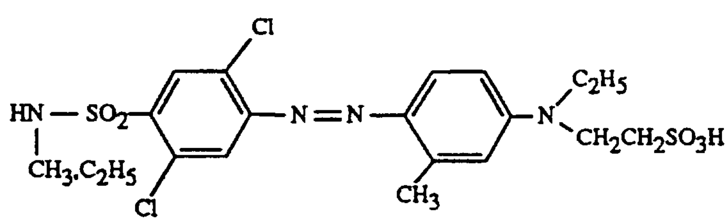

(13),

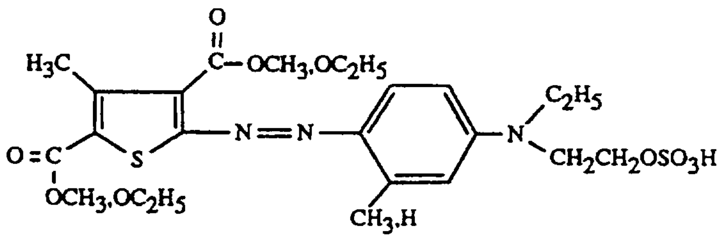

(14),

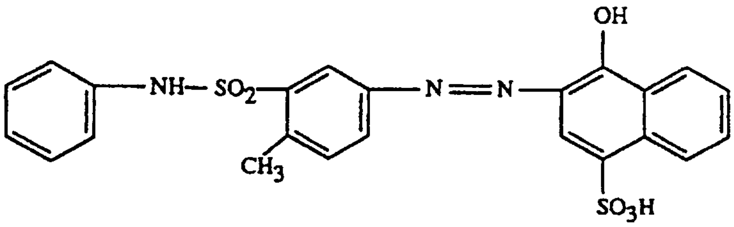

(15) and

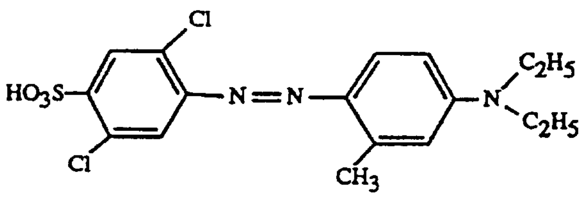

(16).

**7.** A process according to any of claims 1 to 6, wherein the ratio of the dyes used of the formulae (1) and (2) or (1) and (3) or (1) and (4) is 10:90 to 90:10, in particular 40:60 to 60:40, preferably 45:55 to 55:45.

**8.** A process for the dyeing and printing of natural and synthetic polyamide materials by means of a dye mixture, wherein a dye mixture obtained according to any of claims 1 to 7 is used.

**9.** A process for the dyeing and printing of natural and synthetic polyamide materials using a dye mixture obtained according to any of claims 1 to 7 in combination with other dyes.

**10.** A process according to claim 9 for trichromatic dyeing or printing, wherein a dye mixture obtained according to any of claims 1 to 7 is used in combination with at least one yellow or orange dye and at least one blue dye.

**11.** Use of a dye mixture obtained according to claim 1 for the dyeing and printing of natural and synthetic polyamide materials.

**Revendications**

**Revendications pour les Etats contractants suivants : BE, CH, DE, DK, FR, GB, IT, LI, NL**

1. Mélange de colorants, caractérisé en ce qu'il contient un colorant de formule

(1)

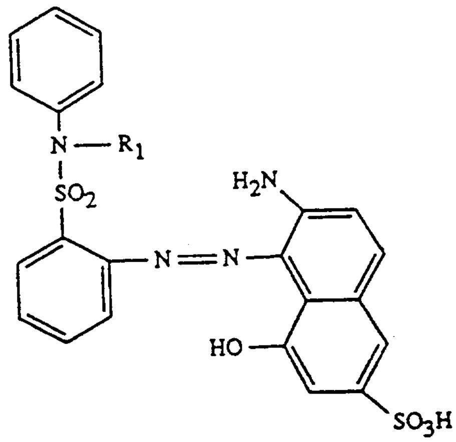

dans laquelle $R_1$ représente un groupe méthyle ou éthyle, et au moins un colorant de formule (2) à (4)

(2)

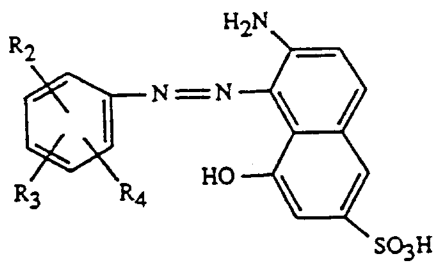

dans laquelle $R_2$ représente un groupe benzoylamino dont le noyau peut être substitué par un halogène, un groupe 1-azacyloheptane-N-sulfonyle ou un groupe

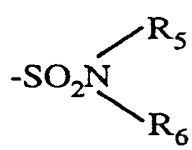

dans laquelle $R_5$ représente un groupe alkyle en $C_1$-$C_8$ ou un groupe phényle pouvant être substitué par un groupe alkyle en $C_1$-$C_4$, et $R_6$ représente un atome d'hydrogène ou $R_5$ et $R_6$ sont des groupes alkyle en $C_1$-$C_8$, $R_3$ représente un atome d'hydrogène, d'halogène ou un groupe alkyle en $C_1$-$C_8$ et $R_4$ représente un atome d'hydrogène ou d'halogène,

(3)

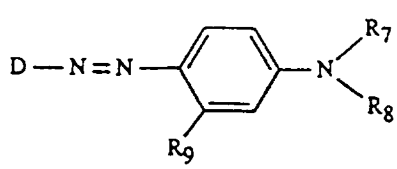

dans laquelle D représente des résidus phényle, thiophényle ou benzothiazolyle pouvant être substitués, $R_7$ un groupe alkyle en $C_1$-$C_8$, $R_8$ un groupe alkyle en $C_1$-$C_8$ pouvant être substitué et $R_9$ un atome d'hydrogène ou un groupe alkyle en $C_1$-$C_4$, et

(4) 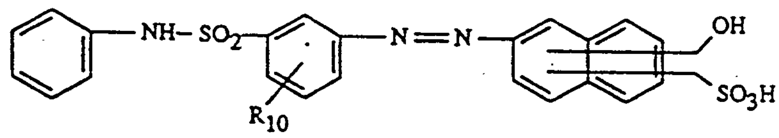

dans laquelle $R_{10}$ représente un résidu alkyle en $C_1$-$C_4$.

**2.** Mélange de colorants conforme à la revendication 1, caractérisé en ce qu'il contient un colorant de formule (2) dans laquelle $R_2$ représente un groupe $-SO_2N(n-C_4H_9)_2$, 1-azacycloheptane-N-sulfonyle, benzoylamino dont le noyau phényle peut être substitué par un atome de chlore, ou un phénylaminosulfonyle dont le noyau peut être substitué par un méthyle, $R_3$ représente un atome d'hydrogène ou de chlore ou un groupe méthyle et $R_4$ un atome d'hydrogène ou de chlore.

**3.** Mélange de colorants conforme à une des revendications 1 ou 2, caractérisé en ce qu'il contient un colorant de formule (3) dans laquelle D représente un noyau phényle substitué par un atome de chlore, un groupe sulfo, méthylaminosulfonyle, éthylaminosulfonyle ou $\beta$-sulfoéthylaminosulfonyle, un groupe thiophényle substitué par un méthyle, méthoxy- ou éthoxycarbonyle ou un groupe benzothiophényle pouvant être substitué par un méthyle, méthoxy ou sulfo, $R_7$ est un groupe éthyle, $R_8$ un groupe éthyle, $\beta$-sulfatoéthyle, $-(CH_2)_{2-3}-SO_3H$ ou benzyle et $R_9$ un atome d'hydrogène ou un groupe méthyle.

**4.** Mélange de colorants conforme à une des revendications 1 à 3, caractérisé en ce qu'il contient comme colorant de formule (4) un colorant de formule

(5) 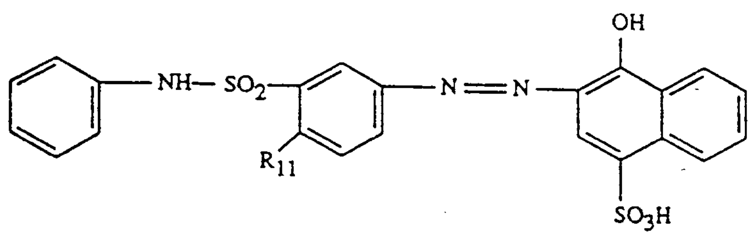

dans laquelle $R_{11}$ représente un groupe méthyle.

**5.** Mélange de colorants conformes à la revendication 1, caractérisé en ce qu'il contient un colorant de formule (2), dans laquelle $R_2$ représente un groupe $-SO_2N(n-C_4H_9)_2$, 1-azacycloheptane-N-sulfonyle, benzoylamino dont le noyau phényle peut être substitué par un atome de chlore, ou un phénylaminosulfonyle dont le noyau peut être substitué par un méthyle, $R_3$ représente un atome d'hydrogène ou de chlore ou un groupe méthyle et $R_4$ un atome d'hydrogène ou de chlore, ou un colorant de formule (3) dans laquelle D représente un noyau phényle substitué par un atome de chlore, un groupe sulfo, méthylaminosulfonyle, éthylaminosulfonyle ou $\beta$-sulfoéthylaminosulfonyle, un groupe thiophényle substitué par un méthyle, méthoxy- ou éthoxycarbonyle ou un groupe benzothiophényle pouvant être substitué par un méthyle, méthoxy ou sulfo, $R_7$ est un groupe éthyle, $R_8$ un groupe éthyle, $\beta$-sulfatoéthyle, $-(CH_2)_{2-3}-SO_3H$ ou benzyle et $R_9$ un atome d'hydrogène ou un groupe méthyle, ou un colorant de formule

(5) 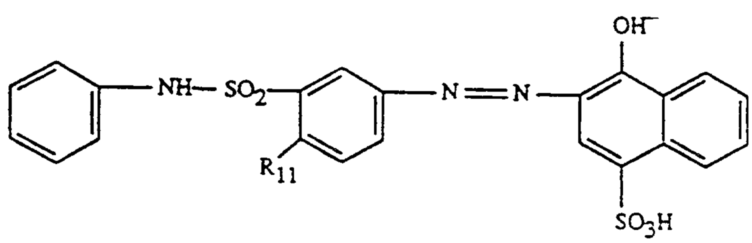

dans laquelle $R_{11}$ représente un groupe méthyle.

6. Mélange de colorants conforme à la revendication 1, caractérisé en ce qu'il contient un colorant de formule (1) dans laquelle $R_1$ représente un groupe méthyle ou éthyle, en particulier éthyle, et au moins un colorant de formule (6) à (16)

(6)

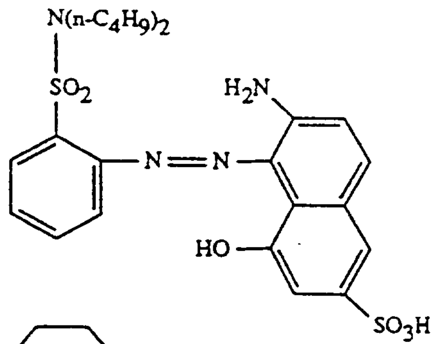

(7)

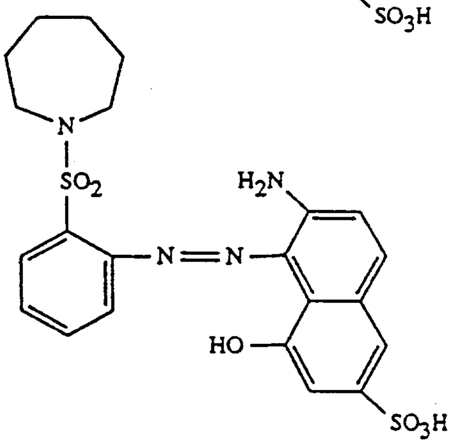

(8)

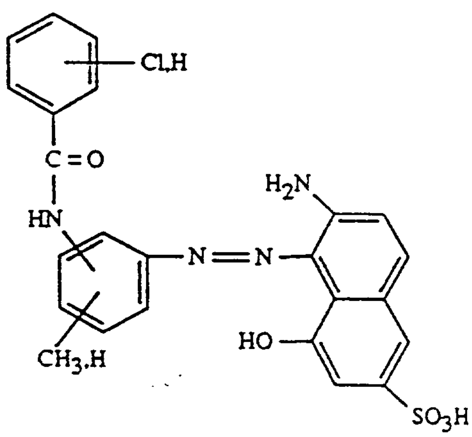

(9)

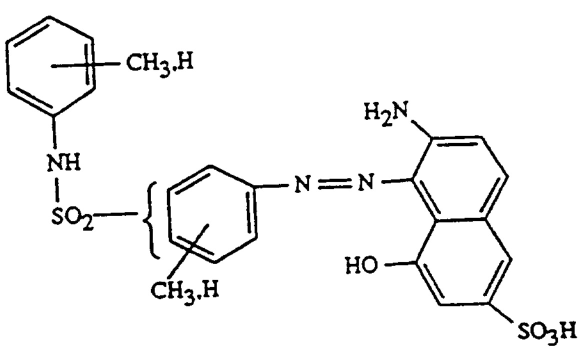

(10)

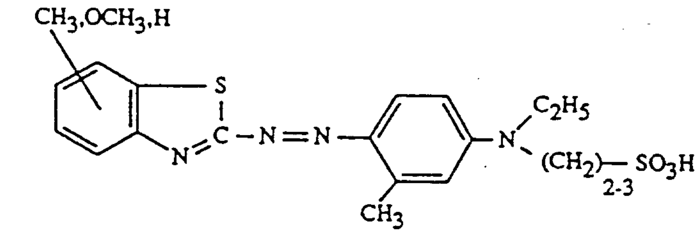

(11)

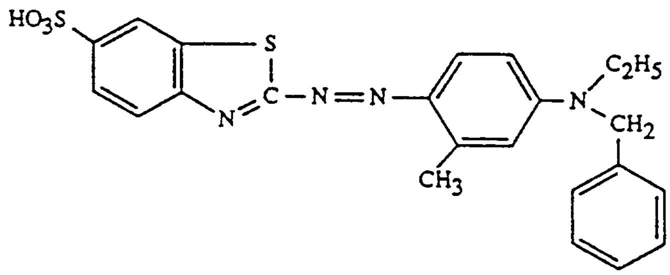

(12)

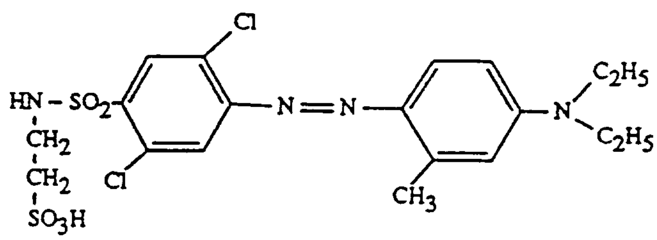

(13)

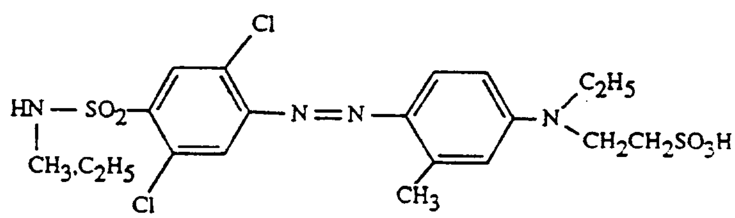

(14)

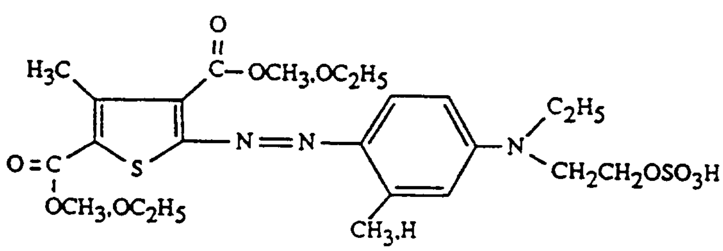

(15) 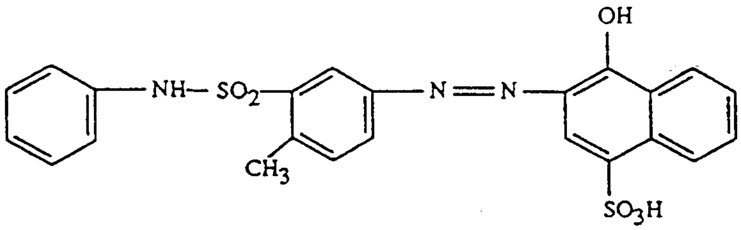 et

(16) 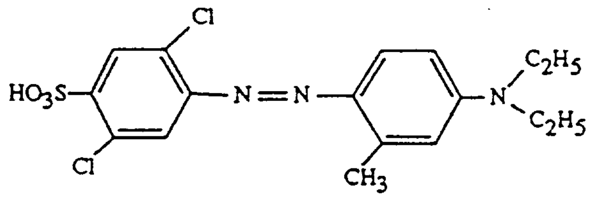

7. Mélange de colorants conforme à une des revendications 1 à 6, caractérisé en ce que le rapport du colorant de formule (1) aux colorants de formule (2), (3) ou (4) est compris entre 10:90 et 90:10, en particulier entre 40:60 et 60:40, et de préférence entre 45:55 et 55:45.

8. Procédé pour la teinture et l'impression de matériaux en polyamide naturel ou synthétique avec un mélange de colorants, caractérisé en ce que l'on utilise un mélange de colorants conforme à une des revendications 1 à 7.

9. Procédé pour la teinture et l'impression de matériaux en polyamide naturel ou synthétique utilisant un mélange de colorants conforme à une des revendications 1 à 7 en combinaison avec d'autres colorants.

10. Procédé conforme à la revendication 9, pour la teinture ou l'impression en trichromie, caractérisé en ce que l'on utilise un mélange de colorants conforme à une des revendications 1 à 7 en combinaison avec au moins un colorant jaune ou orange et au moins un colorant bleu.

11. Utilisation du mélange de colorants conforme à la revendication 1 pour la teinture et l'impression de matériaux en polyamide synthétique et naturel.

12. Préparations pour teintures ou impressions contenant un mélange de colorants conforme aux revendications 1 à 7.

13. Matériau, en particulier matériau textile, teint ou imprimé selon une des revendications 8 à 10 ou 12.

**Revendications pour l'Etat contractant suivant : ES**

1. Procédé de préparation de mélanges de colorants, caractérisé en ce que l'on mélange un colorant de formule

(1) 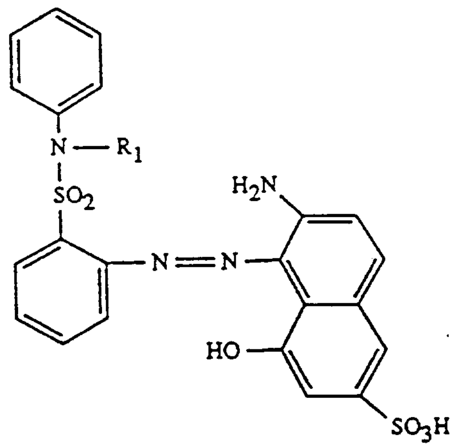

dans laquelle $R_1$ représente un groupe méthyle ou éthyle, et au moins un colorant de formule (2) à (4)

(2) 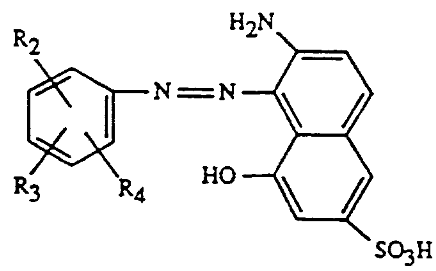

dans laquelle $R_2$ représente un groupe benzoylamino dont le noyau peut être substitué par un halogène, un groupe 1-azacyloheptane-N-sulfonyle ou un groupe

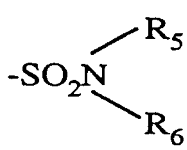

dans laquelle $R_5$ représente un groupe alkyle en $C_1$-$C_8$ ou un groupe phényle pouvant être substitué par un groupe alkyle en $C_1$-$C_4$, et $R_6$ représente un atome d'hydrogène ou $R_5$ et $R_6$ sont des groupes alkyle en $C_1$-$C_8$, $R_3$ représente un atome d'hydrogène, d'halogène ou un groupe alkyle en $C_1$-$C_8$ et $R_4$ représente un atome d'hydrogène ou d'halogène,

(3) 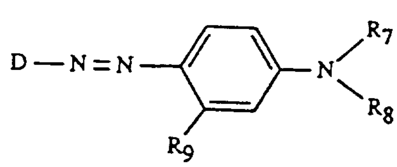

dans laquelle D représente des résidus phényle, thiophényle ou benzothiazolyle pouvant être substitués, $R_7$ un groupe alkyle en $C_1$-$C_8$, $R_8$ un groupe alkyle en $C_1$-$C_8$ pouvant être substitué et $R_9$ un atome d'hydrogène ou un groupe alkyle en $C_1$-$C_4$, et

(4) 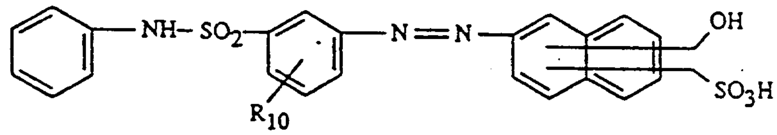

dans laquelle $R_{10}$ représente un résidu alkyle en $C_1$-$C_4$.

2. Procédé conforme à la revendication 1, caractérisé en ce l'on utilise un colorant de formule (2) dans laquelle $R_2$ représente un groupe $-SO_2N(n-C_4H_9)_2$, 1-azacycloheptane-N-sulfonyle, benzoylamino dont le noyau phényle peut être substitué par un atome de chlore, ou un phénylaminosulfonyle dont le noyau peut être substitué par un méthyle, $R_3$ représente un atome d'hydrogène ou de chlore ou un groupe méthyle et $R_4$ un atome d'hydrogène ou de chlore.

3. Procédé conforme à une des revendications 1 ou 2, caractérisé en ce l'on utilise un colorant de formule (3) dans laquelle D représente un noyau phényle substitué par un atome de chlore, un groupe sulfo, méthylaminosulfonyle, éthylaminosulfonyle ou $\beta$-sulfoéthylaminosulfonyle, un groupe thiophényle substitué par un méthyle, méthoxy- ou éthoxycarbonyle ou un groupe benzothiophényle pouvant être substitué par un méthyle, méthoxy ou sulfo, $R_7$ est un groupe éthyle, $R_8$ un groupe éthyle, $\beta$-sulfatoéthyle, $-(CH_2)_{2-3}-SO_3H$ ou benzyle et $R_9$ un atome d'hydrogène ou un groupe méthyle.

4. Procédé conforme à une des revendications 1 à 3, caractérisé en ce que l'on utilise comme colorant de formule (4) un colorant de formule

(5) 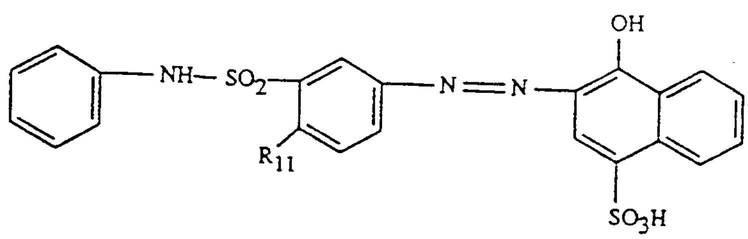

dans laquelle $R_{11}$ représente un groupe méthyle.

5. Procédé conforme à la revendication 1, caractérisé en ce que l'on utilise un colorant de formule (2), dans laquelle $R_2$ représente un groupe $-SO_2N(n-C_4H_9)_2$, 1-azacycloheptane-N-sulfonyle, benzoylamino dont le noyau phényle peut être substitué par un atome de chlore, ou un phénylaminosulfonyle dont le noyau peut être substitué par un méthyle, $R_3$ représente un atome d'hydrogène ou de chlore ou un groupe méthyle et $R_4$ un atome d'hydrogène ou de chlore, ou un colorant de formule (3) dans laquelle D représente un noyau phényle substitué par un atome de chlore, un groupe sulfo, méthylaminosulfonyle, éthylaminosulfonyle ou $\beta$-sulfoéthylaminosulfonyle, un groupe thiophényle substitué par un méthyle, méthoxy- ou éthoxycarbonyle ou un groupe benzothiophényle pouvant être substitué par un méthyle, méthoxy ou sulfo, $R_7$ est un groupe éthyle, $R_8$ un groupe éthyle, $\beta$-sulfatoéthyle, $-(CH_2)_{2-3}-SO_3H$ ou benzyle et $R_9$ un atome d'hydrogène ou un groupe méthyle, ou un colorant de formule

(5) 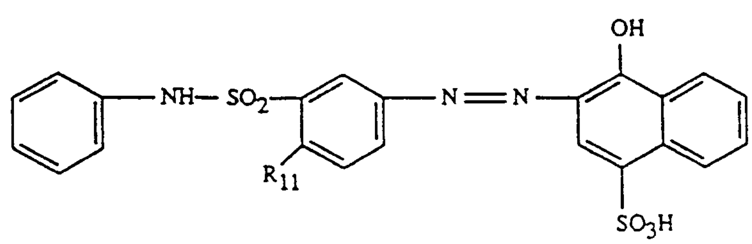

6. Procédé conforme à la revendication 1, caractérisé en ce que l'on mélange un colorant de formule (1) dans laquelle $R_1$ représente un groupe méthyle ou éthyle, en particulier éthyle, avec au moins un colorant de formule (6) à (16)

(6)

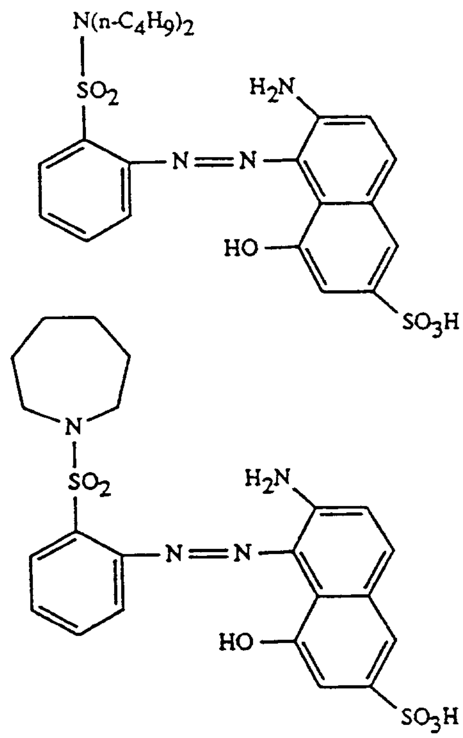

(7)

(8)

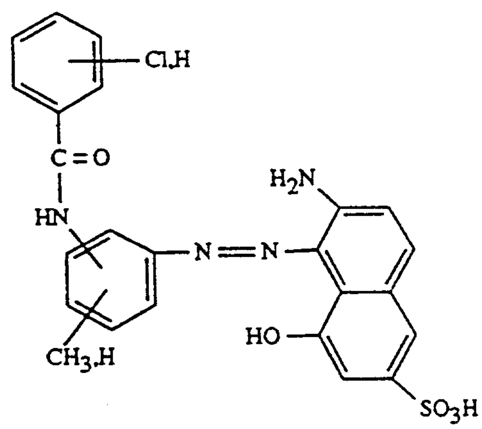

(9)

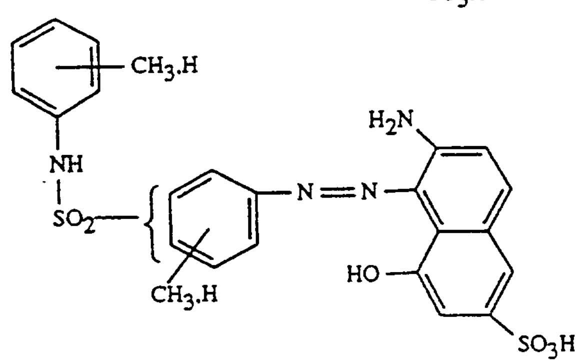

(10)

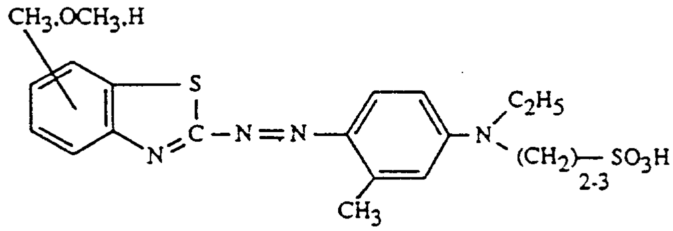

(11)

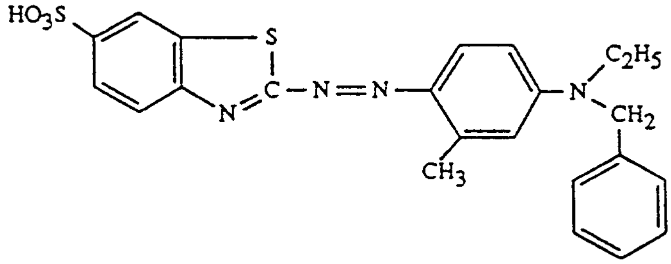

(12)

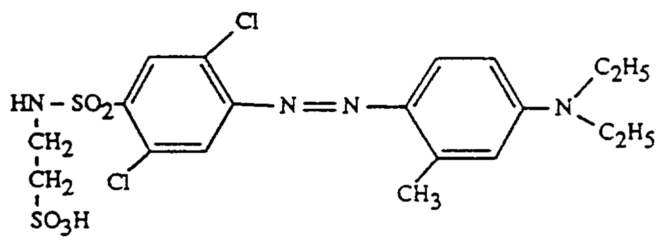

(13)

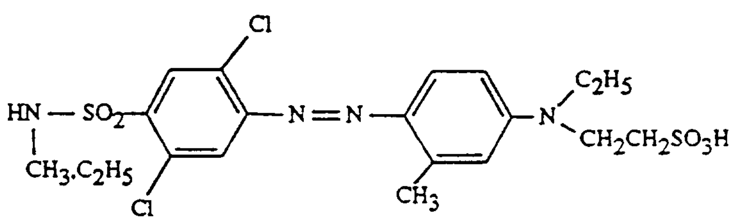

(14)

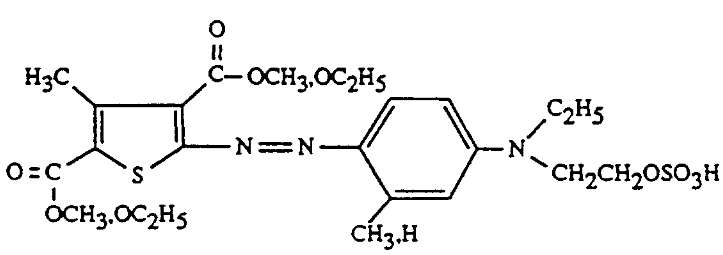

(15) 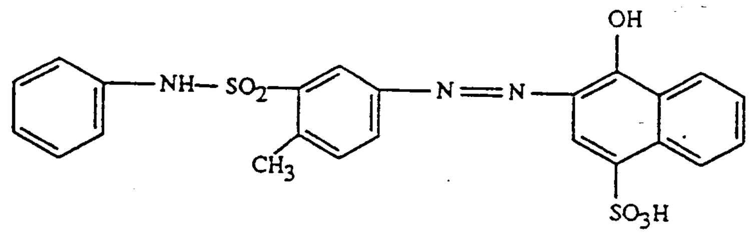 et

(16) 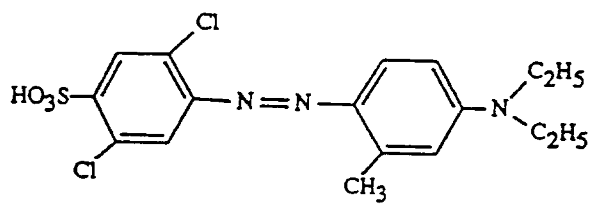

**7.** Procédé conforme à une des revendications 1 à 6, caractérisé en ce que le rapport du colorant de formule (1) aux colorants de formule (2), (3) ou (4) est compris entre 10:90 et 90:10, en particulier entre 40:60 et 60:40, et de préférence entre 45:55 et 55:45.

**8.** Procédé pour la teinture et l'impression de matériaux en polyamide naturel ou synthétique avec un mélange de colorants, caractérisé en ce que l'on utilise un mélange de colorants conforme à une des revendications 1 à 7.

**9.** Procédé pour la teinture et l'impression de matériaux en polyamide naturel ou synthétique utilisant un mélange de colorants conforme à une des revendications 1 à 7 en combinaison avec d'autres colorants.

**10.** Procédé conforme à la revendication 9 pour la teinture ou l'impression en trichromie, caractérisé en ce que l'on utilise un mélange de colorants conforme à une des revendications 1 à 7 en combinaison avec au moins un colorant jaune ou orange et au moins un colorant bleu.

**11.** Utilisation du mélange de colorants obtenue conformément à la revendication 1 pour la teinture et l'impression de matériaux en polyamide synthétique et naturel.